# EUROPÄISCHE PATENTSCHRIFT

(11) **EP 3 930 983 B1**
(45) Veröffentlichungstag und Bekanntmachung des Hinweises auf die Patenterteilung: **28.12.2022**
(21) Anmeldenummer: 20704316.7
(22) Anmeldetag: 17.02.2020
(51) Int. Cl.: B29C 48/25, B29C 48/57, B29C 48/405, B29C 48/425

(54) **SCHNECKENELEMENT MIT NICHT-ACHSENSYMMETRISCHEM SCHNECKENPROFIL UND DESSEN VERWENDUNG**
SCREW ELEMENT WITH NON-AXISSYMMETRICAL SCREW PROFILE AND USE THEREOF
ÉLÉMENT À VIS SANS FIN À PROFIL DE VIS SANS FIN NON AXISYMÉTRIQUE ET SON UTILISATION

(30) Priorität: 27.02.2019 EP 19159671
(43) Veröffentlichungstag der Anmeldung: 05.01.2022
(73) Patentinhaber: Covestro Intellectual Property GmbH & Co. KG, 51373 Leverkusen (DE)
(72) Erfinder: MANNEL, Birgit, 45472 Mülheim an der Ruhr (DE); RUDOLF, Reiner, 40764 Langenfeld (DE); BIERDEL, Michael, 51373 Leverkusen (DE); CONZEN, Carsten, 51375 Leverkusen (DE)
(74) Vertreter: Levpat
(86) Internationale Anmeldenummer: PCT/EP2020/054003
(87) Internationale Veröffentlichungsnummer: WO 2020/173729

(56) Entgegenhaltungen:
- WO-A1-2011/039016
- DE-A1-102008 029 303
- DE-A1-102008 029 306

## Beschreibung

Gegenstand der vorliegenden Erfindung ist ein Schneckenelement, das ein nichtachsensymmetrisches Schneckenquerschnittsprofil aufweist, das mindestens zwei Konstruktionspunkte aufweist, die innerhalb des Schneckenquerschnittsprofils liegen. Das erfindungsgemäße Schneckenelement ist dazu geeignet, in einem Extruder mit zwei gleichsinnig und gleichschnell drehenden Antriebswellen zur Verarbeitung oder Herstellung von plastischen Massen als Extrudat eingesetzt zu werden. Gegenstand der vorliegenden Erfindung ist auch eine Anordnung von zwei gleichen oder unterschiedlichen erfindungsgemäßen Schneckenelementen in einem Extruder mit zwei gleichsinnig und gleich schnell drehenden Antriebswellen, wobei die erfindungsgemäßen Schneckenelemente auf den zwei Antriebswellen paarweise gegenüberliegen. Weiterer Gegenstand der vorliegenden Erfindung ist auch ein mit zwei gleichen oder unterschiedlichen erfindungsgemäßen Schneckenelementen ausgerüsteter Extruder mit zwei gleichsinnig und gleich schnell drehenden Antriebswellen, wobei die erfindungsgemäßen Schneckenelemente auf den zwei Antriebswellen paarweise gegenüberliegen. Gegenstand der vorliegenden Erfindung ist außerdem die Verwendung des erfindungsgemäßen Schneckenelements zur Verarbeitung oder Herstellung von plastischen Massen.

Bei einer Anordnung von zwei gleichen oder unterschiedlichen erfindungsgemäßen Schneckenelementen in einem Extruder mit zwei gleichsinnig und gleich schnell drehenden Antriebswellen, wobei die erfindungsgemäßen Schneckenelemente auf den zwei Antriebswellen paarweise gegenüberliegen, reinigen sich die auf den zwei Antriebswellen paarweise gegenüberliegen erfindungsgemäßen Schneckenelement teilweise - aber nicht vollständig - gegenseitig ab.

Das erfindungsgemäße Schneckenelement ist auch für den Einsatz in Extrudern mit mehr als zwei Antriebswellen, beispielsweise in Extrudern mit mehr als drei oder vier Antriebswellen oder sogenannten Ringextrudern mit acht bis sechzehn, insbesondere zwölf, zueinander ringförmig angeordneten Antriebswellen geeignet. Dabei sind gleiche oder unterschiedliche erfindungsgemäße Schneckenelemente in einer Anzahl, die der Anzahl der Antriebswellen des jeweiligen Extruders entspricht, auf den Antriebswellen gegenüberliegend angeordnet.

Auch bei einer Anordnung von mehr als zwei gleichen oder unterschiedlichen erfindungsgemäßen Schneckenelementen in einem Extruder mit mehr als zwei gleichsinnig und gleich schnell drehenden Antriebswellen, wobei die erfindungsgemäßen Schneckenelemente auf den mehr als zwei Antriebswellen paarweise gegenüberliegen, reinigen sich die auf den mehr als zwei Antriebswellen paarweise gegenüberliegen erfindungsgemäßen Schneckenelement teilweise - aber nicht vollständig - gegenseitig ab.

Ein Schneckenquerschnittsprofil wird nachfolgend kurz auch Schneckenprofil genannt. Im Sinne der vorliegenden Erfindung wird unter einem Konstruktionspunkt ein Punkt verstanden, von dem aus mindestens ein Kreisbogen des Schneckenprofils konstruiert wird und der der Mittelpunkt dieses mindestens einen Kreisbogens ist. Als Mittelpunkt eines Kreisbogens wird dabei der Punkt bezeichnet, der der Mittelpunkt des Kreises ist, von dem der zugehörige Kreisbogen eine Teilmenge ist.

Der Begriff "Kreisbogen" besagt, dass es sich nicht nur um einen Punkt auf dem Schneckenprofil handelt, sondern dass der Kreisbogen mindestens zwei voneinander verschiedene Punkte aufweist, die einen Winkelabstand aufweisen, der nicht gleich Null ist, wobei alle Punkte eines Kreisbogens denselben Mittelpunkt und denselben Radius aufweisen und ein Kreisbogen der zu einem Kreissektor gehörende Teil der Kreislinie ist. Der Winkelabstand wird im Folgenden auch als Zentriwinkel bezeichnet.

Die einem bestimmten Kreisbogen unmittelbar benachbarten zwei Kreisbögen sind:
zum einen der Kreisbogen, der dem bestimmten Kreisbogen unmittelbar vorangeht,
zum zweiten der Kreisbogen, der dem bestimmten Kreisbogen unmittelbar folgt.

Unmittelbar benachbarte Kreisbögen weisen einen gemeinsamen Berührpunkt auf. Ist das Schneckenprofil an diesem Berührpunkt differenzierbar, so weisen die beiden Kreisbögen mit diesem gemeinsamen Berührpunkt einen unterschiedlichen Radius auf, da sich andernfalls diese beiden Kreisbögen mit gleichem Radius zu einem größeren Kreisbogen zusammenfassen ließen. Ist das Schneckenprofil an diesem Berührpunkt nicht differenzierbar, so weisen die beiden Kreisbögen mit diesem gemeinsamen Berührpunkt einen unterschiedlichen Radius oder einen gleichen Radius auf.

Eine mit Schneckenelementen, seien es erfindungsgemäße oder solche gemäß dem Stand der Technik, besetzte Antriebswelle eines Extruders wird nachfolgend auch als Schneckenwelle bezeichnet.

Schneckenelemente, die dazu geeignet sind, in einem Extruder mit zwei gleichsinnig und gleichschnell drehenden Antriebswellen zur Verarbeitung oder Herstellung von plastischen Massen als Extrudat eingesetzt zu werden, sind seit langen bekannt. Beispielsweise [1] = Klemens Kohlgrüber: Der gleichläufige Doppelschneckenextruder, Hanser Verlag, München, 2007 gibt einen ausführlichen und guten Überblick über den Stand der Technik über solche Schneckenelemente und Extruder. Nachfolgend wird ein "Extruder" auch "Schneckenmaschine" genannt.

Bei den Schneckenelementen aus dem Stand der Technik treten aber als Probleme einzeln oder in Kombination häufig auf:
- dass die Mischwirkung mangelhaft ist,
- dass zwischen der Gehäuseinnenwand des Extruders und den Kämmen dieser Schneckenelemente eine ungleichmäßige Kräfteverteilung auftritt, insbesondere zwischen der Gehäuseinnenwand und dem Schneckenkamm, der dem Gehäuse am nächsten ist,
- dass der Kammwinkel des Schneckenkamms, der dem Gehäuse am nächsten ist, nicht frei gewählt werden kann,
- dass eine gleichmäßige Verteilung des Extrudats bei Teilfüllung des Extruders nicht gewährleistet ist, wobei unter Teilfüllung insbesondere verstanden wird, wenn in einem Abschnitt des Extruders der tatsächliche Durchsatz an Extrudat geringer ist, bevorzugt mindestens 10 % geringer ist, besonders bevorzugt mindestens 20 % geringer ist, ganz besonders bevorzugt von 25 % bis 75 % geringer ist, als der maximal mögliche Durchsatz durch diesen Abschnitt ohne Druckaufbau.
- und dass in den letzten vergangenen Jahren Schneckenprofile nicht auf Standard-Schneckenprofilen wie dem Erdmenger-Schneckenprofil beruhten, wodurch sich der Konstruktions- und Fertigungsaufwand erhöht.

US4131371A offenbart in Fig. 5 Erdmenger-Schneckenprofile, deren Mittelpunkte (83, 83') nicht identisch mit den Drehachsen (84, 84') oder den Gehäusebohrungen sind. Solche Schneckenprofile werden als exzentrisch bezeichnet. Die in Fig. 5 von US4131371A gezeigten dreigängigen Erdmenger-Schneckenprofile werden so exzentrisch positioniert, dass genau ein Schneckenkamm 80 (beziehungsweise 80') ein symmetrisches und enges Spiel zur Gehäuseinnenwand bildet, und die anderen beiden Kämme gleiche, aber wesentlich größere Spiele zur Gehäuseinnenwand bilden. Eine derartige Positionierung führt dazu, dass das Spiel zwischen Schneckenkamm 80 (beziehungsweise 80') und Gehäuse nicht gleichmäßig ist, wodurch eine ungleichmäßige Kräfteverteilung auftritt.

Die weiterhin in der US4131371A gezeigten zwei- und dreigängigen Erdmenger-Schneckenprofile besitzen nur eine Kammspitze, weisen also einen Kammwinkel von 0° auf. Eine solche Kammspitze ist mechanisch nicht stabil. Exzentrisch positionierte zweigängige Erdmenger-Schneckenprofile mit einem Kammwinkel größer als 0° würden ebenfalls ein ungleichmäßiges Spiel zwischen Schneckenkamm und Gehäuse aufweisen, wodurch eine ungleichmäßige Kräfteverteilung aufträte.

EP850738A2 offenbart ebenfalls exzentrische dreigängige Schneckenelemente, deren Schneckenkämme alle einen Kammwinkel von 0° aufweisen und damit mechanisch nicht stabil sind.

DE3412258A1 offenbart exzentrische dreigängige und viergängige Schneckenelemente, deren Schneckenkämme alle einen Kammwinkel von 0° aufweisen und damit mechanisch nicht stabil sind.

WO2011116965A1 offenbart Schneckenelemente, bei denen der Mittelpunkt ihrer Querschnittsprofile gegenüber dem Mittelpunkt der Gehäusebohrung und dem Drehmittelpunkt der Förderwellen exzentrisch versetzt angeordnet ist. Die Profile der Schneckenelemente streifen sich vollständig gegenseitig ab, wenn sich die Schneckenelemente auf den Förderwellen gegenüber liegen. Mit dieser Anordnung soll die Produktqualität verbessert und Lastspitzen des Drehmoments an den Tragwellen herabgesetzt und damit die Wirtschaftlichkeit des Extruders entscheidend verbessert werden. Auch hier führt diese Positionierung - analog wie bei US4131371A - dazu, dass das Spiel zwischen Schneckenkamm und Gehäuse nicht gleichmäßig ist, wodurch eine ungleichmäßige Kräfteverteilung auftritt. Außerdem ergibt sich dadurch, dass die Schneckenelemente uneingeschränkt selbstreinigend sind, ein schlechterer Stoffaustausch, d.h. es wird nur eine mangelhafte Mischwirkung erreicht.

WO2011006516A1 offenbart Schneckenelemente mit mindestens zwei Gängen, bei denen ein erster Kamm die Innenwand eines Extrudergehäuses mit einem geringen Spiel abreinigt und ein zweiter Kamm die Innenwand eines Extrudergehäuses mit einem größeren Spiel abreinigt. Mit dieser Anordnung soll ein uneingeschränkt selbstreinigender Mehrwellenextruder zur Verfügung gestellt werden, mit dem die Produktqualität wesentlich und effektiv verbessert wird. Dadurch, dass die Schneckenelemente uneingeschränkt selbstreinigend sind, ergibt sich ein schlechterer Stoffaustausch, d.h. es wird nur eine mangelhafte Mischwirkung erreicht.

Folglich ist es auch mit den Schneckenelementen nach WO2011116965A1 oder WO2011006516A1 nicht möglich, die oben genannten Probleme in befriedigender Weise zu lösen. Das oben für die WO2011006516A1 erläuterte gilt für die EP0002131A1 und die EP0788868A1 gleichermaßen.

DE19718292A1 offenbart in den Figuren 6 bis 8 zweigängige Schneckenelemente, deren Kämmen einen Radius aufweisen, der vom Radius der Gehäuseinnenwand um deutlich mehr als das Gehäusespiel abweicht. Auch diese Ausgestaltung führt - analog wie bei US4131371A - dazu, dass das Spiel zwischen Schneckenkamm und Gehäuse nicht gleichmäßig ist, wodurch eine ungleichmäßige Kräfteverteilung auftritt. Für das in Figur 9 von DE19718292A1 offenbarte Schneckenelement gilt das oben für die WO2011006516A1 erläuterte gleichermaßen. In Fig. 7 von DE19718292A1 weist der Kamm einen Kammwinkel 0° auf. Wie bereits weiter oben erläutert, ist eine solche Kammspitze mechanisch nicht stabil.

DE102008029306 A1 offenbart weitere Schneckenelemente.

Aufgabe der vorliegenden Erfindung ist es deshalb, ein Schneckenelement zur Verfügung zu stellen, mit dem die oben genannten Probleme gelöst werden können.

Insbesondere Aufgabe der vorliegenden Erfindung ist es, ein Schneckenelement zur Verfügung zu stellen, das ermöglicht,
- die Mischwirkung zu verbessern,
- eine gleichmäßige Kräfteverteilung zwischen dem Kamm oder den Kämmen des Schneckenelements und der Gehäuseinnenwand des Extruders zu gewährleisten,
- das Extrudat schonender zu behandeln,
- eine gleichmäßige Verteilung des Extrudats bei Teilfüllung des Extruders zu gewährleisten,
wenn dieses Schneckenelement in einem Extruder mit zwei oder mehr Antriebswellen eingesetzt wird. Dabei soll der Kamm bzw. sollen die Kämme des erfindungsgemäßen Schneckenelements mechanisch stabil sein.

Gelöst wird die Aufgabe durch ein Schneckenelement mit den Merkmalen des Hauptanspruchs.

Insbesondere wird die Aufgabe gelöst durch ein:
Schneckenelement mit der Nutzahl Z,
geeignet für eine zweiwellige Schneckenmaschine
mit zwei gleichsinnig und gleichschnell drehenden Schneckenwellen SW1 und SW2, deren Drehachsen D1 und D2 einen Achsabstand a besitzen und
mit zwei einander durchdringenden, kreisförmigen Gehäusebohrungen, die jeweils einen identischen Gehäuseinnenradius rg aufweisen und deren Bohrungsmittelpunkte M1 und M2 einen Abstand besitzen, der gleich dem Achsabstand a ist, und deren Bohrungsmittelpunkte M1 und M2 mit den Mittelpunkten der Querschnitte der jeweiligen Drehachsen D1 und D2 der Schneckenwellen SW1 und SW2 zusammenfallen,
wobei das Schneckenelement ein Schneckenprofil aufweist, das:
   (1) eine geschlossene konvexe Linie bildet,
   (2) nur aus Kreisbögen zusammengesetzt ist, deren Radius kleiner oder gleich dem Achsabstand a ist, wobei unmittelbar benachbarte Kreisbögen einen unterschiedlichen Radius aufweisen,
   (3) einen ersten Konstruktionspunkt K1 aufweist, der innerhalb des Schneckenprofils liegt,
   (4) bezogen auf den Konstruktionspunkt K1 keine Achsensymmetrie aufweist,
   (5) sich aus mindestens 4, bevorzugt aus 4 bis 25, besonders bevorzugt aus 4 bis 17 Kreisbögen zusammensetzt,
   (6) einen zweiten Konstruktionspunkt K2 aufweist, der nicht mit dem Konstruktionspunkt K1 zusammenfällt, wobei der Konstruktionspunkt K2 innerhalb des Schneckenprofils liegt,
   (7) bezogen auf den Konstruktionspunkt K2 weder Punkt- noch Achsensymmetrie aufweist,
   (8) einen Drehpunkt DP aufweist, der mit einem der Bohrungsmittelpunkte M1 oder M2 zusammenfällt und der auf einer Strecke vom Konstruktionspunkt K1 zum Konstruktionspunkt K2 liegt,
   (9) genau einen Hauptkamm HK aufweist, wobei der Hauptkamm HK aus nur einem Kreisbogen gebildet ist und der Mittelpunkt dieses Kreisbogens der Konstruktionspunkt K2 ist, und wobei der Hauptkamm HK und die Berührpunkte der dem Hauptkamm HK unmittelbar benachbarten zwei Kreisbögen die Menge der Punkte des Schneckenprofils ist, die bezogen auf den Konstruktionspunkt K2 die größte Entfernung von diesem haben,
   (10) mindestens eine Nut aufweist, wobei eine Nut aus nur einem Kreisbogen gebildet ist, dessen Mittelpunkt der Konstruktionspunkt K1 ist, und eine Nut ein Kreisbogen ist, dessen Radius der gleiche ist wie der Kernradius ri, und wobei die einer Nut jeweils unmittelbar benachbarten zwei Kreisbögen bis auf den jeweils gemeinsamen Berührpunkt einen größeren Abstand von dem Konstruktionspunkt K1 besitzen als der Kreisbogen dieser Nut,
   (11) mehrere Flanken aufweist, wobei Flanken die Bereiche des Schneckenprofils sind, deren Kreisbögen einen Mittelpunkt besitzen, der weder der Konstruktionspunkt K1 noch der Konstruktionspunkt K2 ist,
   (12) eine Nut vom nächstliegenden Punkt des Hauptkamms HK durch mindestens einen Kreisbogen getrennt ist, der eine Flanke ist.

Unter der Nutzahl Z wird dabei die Anzahl der Nuten des Schneckenprofils verstanden. Die Nutzahl Z ist eine ganze natürliche Zahl größer oder gleich 1. Bevorzugt ist die Nutzahl Z eine ganze natürliche Zahl von 1 bis 4, besonders bevorzugt ist die Nutzahl 2.

Erfindungsgemäß bevorzugt weist das erfindungsgemäße Schneckenprofil bezogen auf den Konstruktionspunkt K1 keine Punktsymmetrie oder eine Punktsymmetrie auf, bevorzugt weist das erfindungsgemäße Schneckenprofil bezogen auf den Konstruktionspunkt K1 keine Punktsymmetrie auf.

Vorzugsweise weist der Kreisbogen, der den Hauptkamm HK bildet, einen Zentriwinkel auf, der größer als 0° ist, bevorzugt weist der Kreisbogen, der einen Hauptkamm HK bildet, einen Zentriwinkel von 1° bis 179° auf. Dadurch weist der Hauptkamm HK, der gemeinhin den größten mechanischen Belastungen ausgesetzt ist, wenn ein Schneckenelement bestimmungsgemäß eingesetzt wird, eine im Vergleich zum Stand der Technik hohe mechanische Stabilität auf.

Die Anzahl der Kreisbögen des erfindungsgemäßen Schneckenprofils ist erfindungsgemäß bevorzugt gleich der Nutzahl Z vervielfacht um 4 oder gleich der Nutzahl vervielfacht um 4 und anschließend vermehrt um 1, das heißt, dass sich das erfindungsgemäße Schneckenprofil
- bei einer Nutzahl Z=1 bevorzugt aus genau 4 Kreisbögen oder genau 5 Kreisbögen zusammensetzt, besonders bevorzugt aus genau 5 Kreisbögen,
- bei einer Nutzahl Z=2 bevorzugt aus genau 8 Kreisbögen oder genau 9 Kreisbögen zusammensetzt, besonders bevorzugt aus genau 9 Kreisbögen,
- bei einer Nutzahl Z=3 bevorzugt aus genau 12 Kreisbögen oder genau 13 Kreisbögen zusammensetzt, besonders bevorzugt aus genau 13 Kreisbögen,
- bei einer Nutzahl Z=4 bevorzugt aus genau 16 Kreisbögen oder genau 17 Kreisbögen zusammensetzt, besonders bevorzugt aus genau 17 Kreisbögen.

Der zweite Konstruktionspunkt K2 des erfindungsgemäßen Schneckenprofils liegt erfindungsgemäß bevorzugt innerhalb eines Kreises mit dem Konstruktionspunkt K1 als Mittelpunkt und dem Kernradius ri als Radius, wobei der Kernradius ri der Radius ist, der der kleinsten Entfernung vom Konstruktionspunkt K1 und einem Punkt auf dem Schneckenprofil entspricht.

Der zweite Konstruktionspunkt K2 des erfindungsgemäßen Schneckenprofils liegt erfindungsgemäß besonders bevorzugt innerhalb eines Kreises mit dem Konstruktionspunkt K1 als Mittelpunkt und einem Radius, der maximal 30 %, ganz besonders bevorzugt maximal 20 % des Kernradius ri beträgt.

Dadurch wird erreicht, dass das Schneckenelement im bestimmungsgemäßen Einsatz eine im Vergleich zum Stand der Technik hohe mechanische Stabilität auf weist. Auch wird dadurch eine im Vergleich zum Stand der Technik schonendere Behandlung des Extrudats ermöglicht.

Der Drehpunkt DP des erfindungsgemäßen Schneckenelements liegt bevorzugt näher beim Konstruktionspunkt K2 als beim Konstruktionspunkt K1, besonders bevorzugt liegt der Drehpunkt DP auf dem Konstruktionspunkt K2.

Der Radius rHK des Kreisbogens des Hauptkamms HK entspricht bevorzugt dem Gehäuseinnenradius rg vermindert um das Hauptkammspiel c_HK. Das Hauptkammspiel c_HK ist dabei größer 0. Vorzugsweise beträgt dabei das Hauptkammspiel c_HK 0,1% bis 3,2%, bevorzugt 0,2% bis 2,6%, besonders bevorzugt 0,3% bis 2,0%, ganz besonders bevorzugt etwa 0,8% bis 1,4% vom Gehäuseinnenradius rg. Besonders vorzugsweise ist das Hauptkammspiel c_HK über dem gesamten Hauptkamms HK konstant; so bildet sich ein Scherspalt mit konstantem Abstand zwischen Hauptkamm HK und der Gehäuseinnenwand.

Die Kreisbögen, die die Nuten bilden, weisen vorzugsweise
- bei einer Nutzahl Z=1 einen Zentriwinkel von 90° bis 150°, bevorzugt von 95° bis 140°, besonders bevorzugt von 100° bis 130° auf,
- bei einer Nutzahl Z=2 jeweils einen Zentriwinkel von 5° bis 50°, bevorzugt von 10° bis 40°, besonders bevorzugt von 15° bis 30° auf, wobei die Zentriwinkel der Nuten gleich oder unterschiedlich sein können, bevorzugt aber gleich sind,
- bei einer Nutzahl Z=3 jeweils einen Zentriwinkel von 3° bis 30°, bevorzugt von 6° bis 24°, besonders bevorzugt von 9° bis 18° auf, wobei die Zentriwinkel der Nuten gleich oder unterschiedlich sein können, bevorzugt aber gleich sind,
- bei einer Nutzahl Z=4 jeweils einen Zentriwinkel von 2° bis 20°, bevorzugt von 4° bis 16°, besonders bevorzugt von 6° bis 12° auf, wobei die Zentriwinkel der Nuten gleich oder unterschiedlich sein können, bevorzugt aber gleich sind.

Das erfindungsgemäße Schneckenprofil kann einen dritten Konstruktionspunkt K3 aufweist, wobei das Schneckenprofil bezogen auf den Konstruktionspunkt K3 keine Achsensymmetrie und keine Punktsymmetrie aufweist, wobei der Konstruktionspunkt K3 ein Punkt ist, der den gleichen Abstand zum Konstruktionspunkt K1 aufweist wie der Konstruktionspunkt K2 und wobei die Konstruktionspunkte K1, K2 und K3 auf einer Geraden liegen und K1, K2 und K3 nicht identisch sind.

Das erfindungsgemäße Schneckenprofil kann einen Nebenkamm oder mehrere Nebenkämme NKᵢ = NK₁ bis NKₙ aufweisen, wobei jeder Nebenkamm NKᵢ aus nur jeweils einem Kreisbogen gebildet ist, dessen Mittelpunkt der Konstruktionspunkt K1 oder der Konstruktionspunkt K2 oder der Konstruktionspunkt K3 ist. Die tiefergestellten Indizes i und n stellen ganze positive Zahlen dar. Der Index n gibt die Anzahl der Nebenkämme NK₁ bis NKₙ an. Bevorzugt ist die Anzahl n der Nebenkämme NK₁ bis NKₙ gleich der Anzahl der Nuten Z.

Sofern das erfindungsgemäße Schneckenprofil mindestens einen Nebenkamm NKᵢ aufweist, ist eine Nut vom nächstliegenden Punkt dieses Nebenkamms NKᵢ durch mindestens einen Kreisbogen getrennt, der eine Flanke ist. Da eine Nut - wie oben bereits erklärt - vom nächstliegenden Punkt des Hauptkamms HK durch mindestens einen Kreisbogen getrennt ist, der eine Flanke ist, gilt, dass sofern das erfindungsgemäße Schneckenprofil mindestens einen Nebenkamm NKᵢ aufweist, eine Nut nicht nur vom nächstliegenden Punkt des Hauptkamms HK durch mindestens einen Kreisbogen getrennt ist, der eine Flanke ist, sondern auch vom nächstliegenden Punkt dieses Nebenkamms NKᵢ durch mindestens einen Kreisbogen getrennt ist, der eine Flanke ist.

Vorzugsweise weist ein Kreisbogen, der einen Nebenkamm NKᵢ bildet, einen Zentriwinkel auf, der größer als 0° ist, bevorzugt weist ein Kreisbogen, der einen Nebenkamm NKi bildet, einen Zentriwinkel von 1° bis 179° auf. Dadurch weist ein Nebenkamm NKᵢ - der gemeinhin **nach dem Hauptkamm HK den** größten mechanischen Belastungen ausgesetzt ist, wenn ein Schneckenelement bestimmungsgemäß eingesetzt wird - eine im Vergleich zum Stand der Technik hohe mechanische Stabilität auf.

Ein Kreisbogen, der einen Nebenkamm NKᵢ bildet und bei dem keiner der beiden direkt benachbarten Kreisbögen der Hauptkamm HK ist, weist dabei besonders vorzugsweise
- bei einer Nutzahl Z=2 einen Zentriwinkel von 5° bis 50°, bevorzugt von 10° bis 40°, besonders bevorzugt von 15° bis 30° auf,
- bei einer Nutzahl Z=3 einen Zentriwinkel von 3° bis 30°, bevorzugt von 6° bis 24°, besonders bevorzugt von 9° bis 18° auf,
- bei einer Nutzahl Z=4 einen Zentriwinkel von 2° bis 20°, bevorzugt von 4° bis 16°, besonders bevorzugt von 6° bis 12° auf,
wobei bei mehreren Nebenkämmen NK₁ bis NKₙ die Zentriwinkel der Nebenkämme NK₁ bis NKₙ gleich oder unterschiedlich sein können.

Ein Kreisbogen, der einen Nebenkamm NKᵢ bildet und bei dem einer der beiden direkt benachbarten Kreisbögen der Hauptkamm HK ist, weist dabei besonders vorzugsweise
- bei einer Nutzahl Z=1 einen Zentriwinkel von größer 0° bis 140°, bevorzugt von 5° bis 110°, besonders bevorzugt von größer 10° bis 80° auf,
- bei einer Nutzahl Z=2 jeweils einen Zentriwinkel von größer 0° bis 45°, bevorzugt von 5° bis 30°, besonders bevorzugt von größer 10° bis 15° auf,
- bei einer Nutzahl Z=3 jeweils einen Zentriwinkel von größer 0° bis 27°, bevorzugt von 2° bis 18°, besonders bevorzugt von 4° bis 9° auf,
- bei einer Nutzahl Z=4 jeweils einen Zentriwinkel von größer 0° bis 18°, bevorzugt von 1° bis 12°, besonders bevorzugt von 2° bis 6° auf,
wobei bei mehreren Nebenkämme NK₁ bis NKₙ die Zentriwinkel der Nebenkämme NK₁ bis NKₙ gleich oder unterschiedlich sein können.

Für den einen Nebenkamm oder die mehreren Nebenkämme NKᵢ = NK₁ bis NKₙ, die das erfindungsgemäße Schneckenprofil aufweisen kann, gilt außerdem, dass
- die einem Nebenkamm NKᵢ jeweils unmittelbar benachbarten zwei Kreisbögen bis auf den jeweils gemeinsamen Berührpunkt mit dem Nebenkamm NKᵢ einen kleineren Abstand zum Konstruktionspunkt K1 besitzen, wenn der Mittelpunkt des Kreisbogens, der den Nebenkamm NKᵢ bildet, der Konstruktionspunkt K1 ist, oder einen kleineren Abstand zum Konstruktionspunkt K2 besitzen, wenn der Mittelpunkt des Kreisbogens, der den Nebenkamm NKᵢ bildet, der Konstruktionspunkt K2 ist, oder einen kleineren Abstand zum Konstruktionspunkt K3 besitzen, wenn der Mittelpunkt des Kreisbogens, der den Nebenkamm NKᵢ bildet, der Konstruktionspunkt K3 ist,
- der Kreisbogen, der einen Nebenkamm NKᵢ bildet, einen kleineren Abstand zum Konstruktionspunkt K2 aufweist als der Hauptkamm HK, wenn der Mittelpunkt des Kreisbogens, der den Nebenkamm NKᵢ bildet, der Konstruktionspunkt K2 ist.

Vorzugsweise berührt der Kreisbogen, der den Hauptkamm HK bildet, einen Kreisbogen, der einen Nebenkamm NKᵢ bildet, wobei Kreisbogen des Nebenkamms NKᵢ als Mittelpunkt den Konstruktionspunkt K1 hat und dessen Radius rNK dem Gehäuseinnenradius rg vermindert um das Nebenkammspiel c_NK entspricht.

Vorzugsweise weist der Kreisbogen, der den Hauptkamm HK bildet und bei dem keiner der beiden unmittelbar benachbarten Kreisbögen ein Nebenkamm NKᵢ ist,
- bei einer Nutzahl Z=1 einen Zentriwinkel von 90° bis 150°, bevorzugt von 95° bis 140°, besonders bevorzugt von 100° bis 130° auf,
- bei einer Nutzahl Z=2 einen Zentriwinkel von 5° bis 50°, bevorzugt von 10° bis 40°, besonders bevorzugt von 15° bis 30° auf,
- bei einer Nutzahl Z=3 einen Zentriwinkel von 3° bis 30°, bevorzugt von 6° bis 24°, besonders bevorzugt von 9° bis 18° auf,
- bei einer Nutzahl Z=4 einen Zentriwinkel von 2° bis 20°, bevorzugt von 4° bis 16°, besonders bevorzugt von 6° bis 12° auf,

Vorzugsweise weist der Kreisbogen, der Kreisbogen, der den Hauptkamm HK bildet und bei dem einer der beiden unmittelbar benachbarten Kreisbögen ein Nebenkamm NKᵢ ist,
- bei einer Nutzahl Z=1 einen Zentriwinkel von 10° bis 150°, bevorzugt von 30° bis 140°, besonders bevorzugt von 50° bis 130° auf,
- bei einer Nutzahl Z=2 einen Zentriwinkel von 5° bis 50°, bevorzugt von 10° bis 40°, besonders bevorzugt von 15° bis 30° auf,
- bei einer Nutzahl Z=3 einen Zentriwinkel von 3° bis 30°, bevorzugt von 6° bis 24°, besonders bevorzugt von 9° bis 18° auf,
- bei einer Nutzahl Z=4 einen Zentriwinkel von 2° bis 20°, bevorzugt von 4° bis 16°, besonders bevorzugt von 6° bis 12° auf.

Insbesondere betragen die beiden Innenwinkel zwischen dem Kreisbogen des Hauptkamms HK und sowohl dem Kreisbogen, der dem Kreisbogen des Hauptkamms HK unmittelbar vorangeht und mit dem Kreisbogen des Hauptkamms HK einen gemeinsamen Berührpunkt hat, als auch dem Kreisbogen, der dem Kreisbogen des Hauptkamms HK unmittelbar nachfolgt und mit dem Kreisbogen des Hauptkamms HK einen gemeinsamen Berührpunkt hat, von 130° bis 180°, bevorzugt von 135° bis 180°, besonders bevorzugt von 140 bis 180°. Dabei können diese beiden Innenwinkel gleich oder unterschiedlich sein; bevorzugt sind sie unterschiedlich.

Im Sinne der vorliegenden Erfindung ist ein Innenwinkel zwischen zwei unmittelbar benachbarten Kreisbögen der innerhalb des Schneckenprofils liegende Winkel zwischen den Tangenten der betreffenden Kreisbögen, wobei die Tangenten durch den gemeinsamen Berührpunkt der betreffenden Kreisbögen laufen.

Weiter insbesondere betragen die beiden Innenwinkel zwischen einem Kreisbogen eines Nebenkamms NKᵢ und sowohl dem Kreisbogen, der dem Kreisbogen eines Nebenkamms NKᵢ unmittelbar vorangeht und mit dem Kreisbogen eines Nebenkamms NKᵢ einen gemeinsamen Berührpunkt hat, als auch dem Kreisbogen, der dem Kreisbogen eines Nebenkamms NKᵢ unmittelbar nachfolgt und mit dem Kreisbogen eines Nebenkamms NKᵢ einen gemeinsamen Berührpunkt hat, von 130° bis 180°, bevorzugt von 135° bis 180°, besonders bevorzugt von 140 bis 180°. Dabei können diese beiden Innenwinkel gleich oder unterschiedlich sein.

Ganz insbesondere betragen alle Innenwinkel zwischen zwei unmittelbar benachbarten Kreisbögen des erfindungsgemäßen Schneckenprofils, von 130° bis 180°, bevorzugt von 135° bis 180°, besonders bevorzugt von 140 bis 180°.

Dadurch wird zusätzlich erreicht, dass das Schneckenelement im bestimmungsgemäßen Einsatz eine im Vergleich zum Stand der Technik hohe mechanische Stabilität auf weist. Auch wird dadurch eine im Vergleich zum Stand der Technik schonendere Behandlung des Extrudats ermöglicht.

Vorzugsweise hat eine Flanke einen Radius, der dem Achsabstand a entspricht. Weiter vorzugsweise hat ein Kreisbogen, der eine Flanke bildet, einen Mittelpunkt, der weder der Konstruktionspunkt K1 noch der Konstruktionspunkt K2 noch der Konstruktionspunkt K3 ist.

Weiter vorzugsweise beträgt der Abstand vom Konstruktionspunkt K1 zum Konstruktionspunkt K2 0,2% bis 20%, bevorzugt 0,4% bis 15%, besonders bevorzugt 0,6% bis 10%, ganz besonders bevorzugt 0,8% bis 5% vom Gehäuseinnenradius rg,

Weiter vorzugsweise beträgt beim erfindungsgemäßen Schneckenprofil
- bei einer Nutzahl Z=1 der kleinere Winkel zwischen der Winkelhalbierenden der Nut und der Verbindungslinie zwischen K1 und K2 von 0° bis 90°, bevorzugt von 45° bis 70° und besonders bevorzugt etwa 55°,
- bei einer Nutzahl Z=2 der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 von 110° bis 160°, bevorzugt von 125° bis 145° und besonders bevorzugt etwa 135°,
- bei einer Nutzahl Z=3 der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 von 130° bis 170°, bevorzugt von 140° bis 160° und besonders bevorzugt etwa 150°,
- bei einer Nutzahl Z=4 der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 on 140° bis 175°, bevorzugt von 150° bis 165° liegt und besonders bevorzugt etwa 157,5°.

Aus dem vorgenannten ergibt sich, dass
- der Abstand des Hauptkamms HK vom Konstruktionspunkt K1 in jedem Punkt des Hauptkamms HK größer ist als der Kernradius und damit dieser Abstand auch größer ist als der Abstand einer Nut zum Konstruktionspunkt K1,
- der Abstand des Hauptkamms HK vom Konstruktionspunkt K2 in jedem Punkt des Hauptkamms HK gleich wie oder kleiner als der Gehäuseinnenradius rg ist,
- der Abstand jedes Nebenkamms NKᵢ vom Konstruktionspunkt K1 in jedem Punkt des betreffenden Nebenkamms NKᵢ größer ist als der Kernradius und damit dieser Abstand auch größer ist als der Abstand einer Nut zum Konstruktionspunkt K1,
- ein Hauptkamm HK und ein Nebenkamm NKᵢ unmittelbar nebeneinander liegen und einen gemeinsamen Berührpunkt aufweisen können.

Das erfindungsgemäße Schneckenelement ermöglicht es,
- die Mischwirkung zu verbessern,
- eine gleichmäßige Kräfteverteilung zwischen dem Kamm oder den Kämmen des Schneckenelements und der Gehäuseinnenwand des Extruders zu gewährleisten,
- das Extrudat schonender zu behandeln,
- eine gleichmäßige Verteilung des Extrudats bei Teilfüllung des Extruders zu gewährleisten,
wenn dieses Schneckenelement in einem Extruder mit zwei oder mehr Antriebswellen eingesetzt wird. Dabei weist das Schneckenelement, insbesondere der Hauptkamm HK und - soweit vorhanden - der Nebenkamm NKᵢ oder die Nebenkämme NK₁ bis NKₙ, ganz insbesondere der Hauptkamm HK, eine im Vergleich zum Stand der Technik hohe mechanische Stabilität auf.

Dies ist überraschend, denn - wie bereits oben ausgeführt - reinigen sich bei einer Anordnung von zwei gleichen oder unterschiedlichen erfindungsgemäßen Schneckenelementen in einem Extruder mit zwei gleichsinnig und gleich schnell drehenden Antriebswellen, wobei die erfindungsgemäßen Schneckenelemente auf den zwei Antriebswellen paarweise gegenüberliegen, die auf den zwei Antriebswellen paarweise gegenüberliegen erfindungsgemäßen Schneckenelement nur teilweise - aber nicht vollständig - gegenseitig ab. Analoges gilt - wie bereits oben ausgeführt - für eine Anordnung von mehr als zwei gleichen oder unterschiedlichen erfindungsgemäßen Schneckenelementen in einem Extruder mit mehr als zwei gleichsinnig und gleich schnell drehenden Antriebswellen, wobei die erfindungsgemäßen Schneckenelemente auf den mehr als zwei Antriebswellen jeweils paarweise gegenüberliegen.

Bisher wurde davon ausgegangen, dass zur Lösung der Aufgabe Schneckenelemente nötig seien, die sich gegenseitig vollständig abreinigen.

Es wurde jedoch überraschend gefunden, dass mit den erfindungsgemäßen Schneckenelementen
- eine bessere Mischwirkung durch Rückströmen des Extrudats in die nichtselbstreinigenden Bereiche der Schneckenelemente,
- eine gleichmäßige Kräfteverteilung durch einen Scherspalt mit konstantem Abstand zwischen Hauptkamm HK und der Gehäuseinnenwand, und
- eine gleichmäßigere Verteilung von plastischer Masse bei Teilfüllung durch Rückströmen des Extrudats in den nichtselbstreinigenden Bereichen der Schneckenelemente
erreicht wird. Dabei wird zusätzlich eine im Vergleich zum Stand der Technik schonendere Behandlung des Extrudats ermöglicht.

Der Hauptkamm HK eines erfindungsgemäßen Schneckenelements beschneidet beim Einsatz in einer Schneckenmaschine die sich ausbildenden Strömungskanäle derart, dass sich entlang der Gehäusewand ein gleichmäßiger Strömungsspalt bildet. Dadurch ergibt sich die gleichmäßige Kräfteverteilung.

Das erfindungsgemäße Schneckenelement ist dazu geeignet, in einer Schneckenmaschine mit zwei gleichsinnig und gleichschnell drehenden Antriebswellen mit einem anderen erfindungsgemäßen Schneckenelement mit gleichem oder unterschiedlichen Schneckenprofil und gleichen oder unterschiedlicher Anordnung des Drehpunkts auf der anderen Schneckenwelle paarweise angeordnet zu sein und betrieben zu werden, wobei bevorzugt erfindungsgemäße Schneckenelemente mit gleichen Schneckenprofil eingesetzt werden. Das erfindungsgemäße Schneckenelement ist in analoger Weise auch für den Einsatz in Schneckenmaschinen mit mehr als zwei gleichsinnig und gleichschnell drehenden Antriebswellen geeignet.

Das erfindungsgemäße Schneckenelement kann als Förder-, Knet- oder Mischelement ausgebildet sein, bevorzugt als Förderelement oder Knetelement.

Gegenstand der vorliegenden Erfindung ist daher auch eine Anordnung von zwei gleichen oder unterschiedlichen erfindungsgemäßen Schneckenelementen in einer Schneckenmaschine mit zwei gleichsinnig und gleich schnell drehenden Antriebswellen, wobei die erfindungsgemäßen Schneckenelemente auf den zwei Antriebswellen paarweise gegenüberliegen. Entsprechend Gegenstand der vorliegenden Erfindung ist daher auch eine Anordnung von mehr als zwei gleichen oder unterschiedlichen erfindungsgemäßen Schneckenelementen in einer Schneckenmaschine mit mehr als zwei gleichsinnig und gleich schnell drehenden Antriebswellen, wobei die erfindungsgemäßen Schneckenelemente auf den mehr als zwei Antriebswellen jeweils paarweise gegenüberliegen.

Weiterer Gegenstand der vorliegenden Erfindung ist auch eine mit zwei gleichen oder unterschiedlichen erfindungsgemäßen Schneckenelementen ausgerüstete Schneckenmaschine mit zwei gleichsinnig und gleich schnell drehenden Antriebswellen, wobei die erfindungsgemäßen Schneckenelemente auf den zwei Antriebswellen paarweise gegenüberliegen. Entsprechend Gegenstand der vorliegenden Erfindung ist daher auch eine mit mehr als zwei gleichen oder unterschiedlichen erfindungsgemäßen Schneckenelementen ausgerüstete Schneckenmaschine mit mehr als zwei gleichsinnig und gleich schnell drehenden Antriebswellen, wobei die erfindungsgemäßen Schneckenelemente auf den mehr als zwei Antriebswellen jeweils paarweise gegenüberliegen.

Das erfindungsgemäße Schneckenprofil lässt sich in einfacher Weise aus einem Referenzschneckenprofil konstruieren; dieses Referenzschneckenprofil ist dabei bevorzugt ein Schneckenprofil aus dem Stand der Technik, besonders bevorzugt ein sogenanntes Erdmengerprofil, siehe [1], Seiten 249 bis 253.

Dabei gilt
- dass der Kernradius ri, die Nutzahl Z und der Außenradius ra des erfindungsgemäßen Schneckenprofils dem Kernradius ri, der Nutzahl Z und dem Außenradius ra des Referenzschneckenprofils entsprechen
   und
   der Konstruktionspunkt K1 des erfindungsgemäßen Schneckenprofils gleich dem Konstruktionspunkt K1 des Referenzschneckenprofils ist,
- wobei der Außenradius des Referenzschneckenprofils rfra um 0,2% bis 10%, bevorzugt 0,4% bis 7,5%, besonders bevorzugt 0,6% bis 5%, ganz besonders bevorzugt 0,8% bis 2,5% geringer ist als der Gehäuseinnenradius rg,
- wobei sich zwei gleichartige des Referenzschneckenprofile paarweise gegenseitig exakt abreinigen,
   o wenn die des Referenzschneckenprofile einen Referenz-Abstand rfa aufweisen, der dem Achsabstand a entspricht, und
   o wenn die Referenzschneckenprofile sich in ihren jeweiligen Referenz-Drehpunkten, Referenz-Drehpunkt 1 (rfDP1) und Referenz-Drehpunkt 2 (rfDP2), mit gleicher Geschwindigkeit mit dem gleichen Drehsinn drehen.

In ein solches Referenzschneckenprofil wird dann ein zweiter Konstruktionspunkt K2 - wie oben erläutert - eingefügt, sowie gegebenenfalls - wie ebenfalls oben erläutert - auch ein dritter Konstruktionspunkt K3 eingefügt. Ausgehend von diesem Konstruktionspunkt K2, und wenn vorhanden auch ausgehend von dem Konstruktionspunkt K3, wird mindestens ein weiterer Kreisbogen in das Schneckenprofil eingefügt, wobei dieser mindestens eine weitere Kreisbogen mindestens einen bereits im Referenzschneckenprofil vorhandenen Kreisbogen schneidet und die Teile des mindestens einen bereits vorhanden Kreisbogens, die durch den mindestens einen weiteren Kreisbogen "abgeschnitten" wurden, durch den mindestens einen weiteren Kreisbogen ersetzt werden.

Gegenstand der vorliegenden Erfindung ist außerdem die Verwendung des erfindungsgemäßen Schneckenelements zur Verarbeitung oder Herstellung von plastischen Massen.

Im Sinne der vorliegenden Erfindung werden unter plastischen Massen verstanden:
Suspensionen, Pasten, Glasschmelzen, ungebrannte Keramiken, Metallschmelzen, Kunststoffe, Kunststoffschmelzen oder -lösungen, Polymerschmelzen oder -lösungen, Elastomere, Kautschukschmelzen oder -lösungen.

Bevorzugt werden Kunststoffe, Polymerlösungen oder -schmelzen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Polymeren, worunter der Fachmann eine Kombination aus zwei oder mehreren Polymeren versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

### Beschreibung der Figuren

Die Erfindung wird nachstehend anhand der Figuren beispielhaft näher erläutert, ohne sie jedoch auf diese zu beschränken. Alle Figuren wurden mit Hilfe eines Computerprogramms erzeugt.

Sinnvollerweise verwendet man zur Erzeugung oder Beschreibung von Schneckenprofilen oder -elementen dimensionslose Kennzahlen, um die Übertragbarkeit auf unterschiedliche Größen von Schneckenelementen oder Extrudern zu vereinfachen. Als Bezugsgröße für geometrische Größen wie zum Beispiel Längen, Radien oder Spiele bietet sich der Achsabstand a an, da diese Größe an einem Extruder nicht verändert werden kann. Für den dimensionslosen Achsabstand A gilt A=a/a=1. Der dimensionslose Gehäuseinnenradius RG berechnet sich zu RG=rg/a, wobei rg der Gehäuseinnenradius ist. Für den dimensionslosen Schneckenaußenradius RA eines Schneckenprofils folgt RA=ra/a, wobei ra der Schneckenaußenradius ist. Der dimensionslose Kernradius RI eines Schneckenprofils berechnet sich zu RI=ri/a, wobei ri der Kernradius ist. Das dimensionslose Spiel C eines Schneckenkamms zum Gehäuse berechnet sich zu C=c/a, wobei c das Spiel eines Schneckenkamms zum Gehäuse ist. Das entsprechende dimensionslose Spiel des Hauptkamms HK wird mit C_HK und das entsprechende dimensionslose Spiel eines Nebenkamms NKᵢ mit C_NK bezeichnet. Für einen dimensionsloser Radius R gilt entsprechend R=r/a.

In den Figuren werden alle geometrischen Größen rechts neben der jeweiligen Figur in ihrer dimensionslosen Form verwendet. Alle Winkelangaben erfolgen im Bogenmaß oder in Grad.

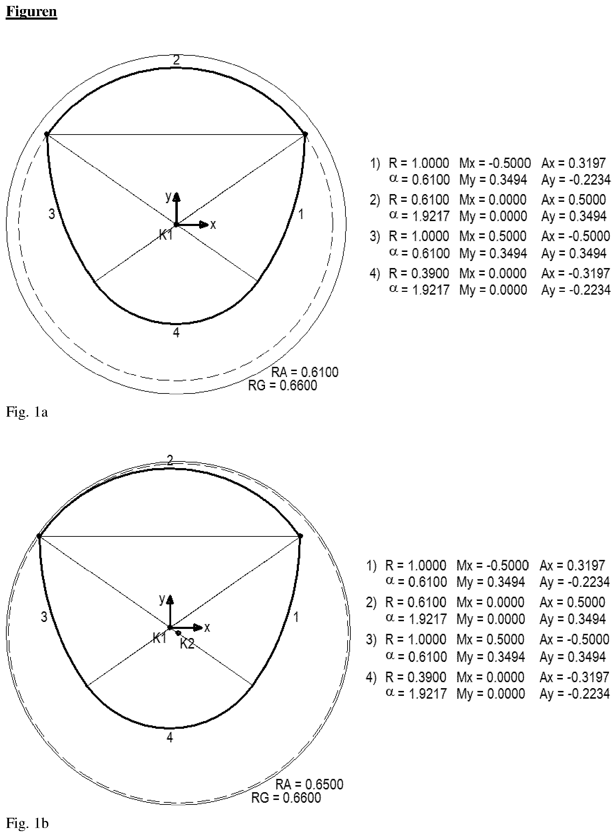

Figur 1a zeigt ein Schneckenprofil mit der Nutzahl Z=1 gemäß dem Stand der Technik und Figur 1b zeigt das Schneckenprofil von Figur 1a exzentrisch verschoben.
   Unter exzentrisch verschoben wird im Sinne der vorliegenden Erfindung verstanden, dass der Konstruktionspunkt K1 eines Schneckenprofils nicht im Drehpunkt liegt. Der Konstruktionspunkt K1 ist der Punkt, der der Mittelpunkt des Kreisbogens oder der Kreisbögen ist, der eine Nut oder die die Nuten bilden.
Figur 2a zeigt ein erfindungsgemäßes Schneckenprofil mit der Nutzahl Z=1 und Figur 2b zeigt das Schneckenprofil von Figur 2a exzentrisch verschoben.
Figur 3a zeigt ein weiteres erfindungsgemäßes Schneckenprofil mit der Nutzahl Z=1 und Figur 3b zeigt das Schneckenprofil von Figur 3a exzentrisch verschoben.
Figur 4a zeigt ein weiteres erfindungsgemäßes Schneckenprofil mit der Nutzahl Z=1 und Figur 4b zeigt das Schneckenprofil von Figur 4a exzentrisch verschoben.
Figur 5a zeigt ein Schneckenprofil mit der Nutzahl Z=2 gemäß dem Stand der Technik und Figur 5b zeigt das Schneckenprofil von Figur 5a exzentrisch verschoben.
Figur 6a zeigt ein erfindungsgemäßes Schneckenprofil mit der Nutzahl Z=2 und Figur 6b zeigt das Schneckenprofil von Figur 6a exzentrisch verschoben.
Figur 7a zeigt ein weiteres erfindungsgemäßes Schneckenprofil mit der Nutzahl Z=2 und Figur 7b zeigt das Schneckenprofil von Figur 7a exzentrisch verschoben.
Figur 8a zeigt ein weiteres erfindungsgemäßes Schneckenprofil mit der Nutzahl Z=2 und Figur 8b zeigt das Schneckenprofil von Figur 8a exzentrisch verschoben.
Figur 9a zeigt ein weiteres erfindungsgemäßes Schneckenprofil mit der Nutzahl Z=2 und Figur 9b zeigt das Schneckenprofil von Figur 9a exzentrisch verschoben.
Figur 10a zeigt ein weiteres erfindungsgemäßes Schneckenprofil mit der Nutzahl Z=2 und Figur 10b zeigt das Schneckenprofil von Figur 10a exzentrisch verschoben.
Figur 11a1 zeigt ein Schneckenprofil mit der Nutzahl Z=3 gemäß dem Stand der Technik, Figur 11a2 eine Ausschnittvergrößerung um einen Schneckenkamm (Kreisbogen 6) der Figur 11a1, Figur 11b1 zeigt das Schneckenprofil von Figur 11a1 exzentrisch verschoben und Figur 11b2 eine Ausschnittvergrößerung um einen Schneckenkamm (Kreisbogen 6) der Figur 11b1.
Figur 12a1 zeigt ein erfindungsgemäßes Schneckenprofil mit der Nutzahl Z=3, Figur 12a2 eine Ausschnittvergrößerung um den Hauptkamm HK (Kreisbogen 6a) und einen Nebenkamm NKᵢ (Kreisbogen 6) der Figur 12a1, Figur 12b1 zeigt das Schneckenprofil von Figur 12a exzentrisch verschoben und Figur 12b2 eine Ausschnittvergrößerung um den Hauptkamm HK (Kreisbogen 6a) und einen Nebenkamm NKᵢ (Kreisbogen 6) der Figur 12b1.
Figur 13a1 zeigt ein Schneckenprofil mit der Nutzahl Z=4 gemäß dem Stand der Technik, Figur 13a2 eine Ausschnittvergrößerung um den Schneckenkamm (Kreisbogen 6) und Figur 13b1 zeigt das Schneckenprofil von Figur 13a1 exzentrisch verschoben und Figur 13b2 eine Ausschnittvergrößerung um einen Schneckenkamm (Kreisbogen 6) der Figur 13b1.
Figur 14a1 zeigt ein erfindungsgemäßes Schneckenprofil mit der Nutzahl Z=4, Figur 14a2 eine Ausschnittvergrößerung um den Hauptkamm HK (Kreisbogen 6a) und einen Nebenkamm NKᵢ (Kreisbogen 6) der Figur 14a1, Figur 14b1 zeigt das Schneckenprofil von Figur 14a1 exzentrisch verschoben und Figur 14b2 eine Ausschnittvergrößerung um den Hauptkamm HK (Kreisbogen 6a) und einen Nebenkamm NKᵢ (Kreisbogen 6) der Figur 14b1.
Figur 15 zeigt das erfindungsgemäße Schneckenprofil mit der Nutzahl Z=1 aus Figur 2b als ein Paar zweier identischer Schneckenprofile.
Figur 16 zeigt das erfindungsgemäße Schneckenprofil mit der Nutzahl Z=2 aus Figur 6b als ein Paar zweier identischer Schneckenprofile.
Figur 17 zeigt das erfindungsgemäße Schneckenprofil mit der Nutzahl Z=3 aus Figur 12b als ein Paar zweier identischer Schneckenprofilen.
Figur 18 zeigt das erfindungsgemäße Schneckenprofil mit der Nutzahl Z=4 aus Figur 14b als ein Paar zweier identischer Schneckenprofile.
Figur 19 zeigt die erfindungsgemäßen Schneckenprofile aus Figur 16 ausgebildet als ein Paar von Förderelementen.
Figur 20 zeigt das Schneckenprofil mit der Nutzahl Z=2 aus Figur 5a als ein Paar zweier identischer Schneckenprofile.

Die Figuren 1 bis 14 weisen grundsätzlich den gleichen Aufbau auf, der nachfolgend im Detail beschrieben wird. Jede der Figuren weist einen Konstruktionspunkt K1 auf, in dem sich auch der Ursprung eines xy-Koordinatensystems befindet. Neben dem Konstruktionspunkt K1 können die Figuren auch noch einen Konstruktionspunkt K2 und darüber hinaus noch einen Konstruktionspunkt K3 aufweisen. Die Kreisbögen des Schneckenprofils sind durch dicke, durchgezogene Linien gekennzeichnet, die mit den jeweiligen Nummern der Kreisbögen versehen sind. Die Kreisbögen sind entgegen dem Urzeigersinn durchnummeriert, also mit mathematisch positivem Richtungssinn. Der Anfangspunkt eines Kreisbogens ist dabei der erste Punkt eines Kreisbogen und der Endpunkt der letzte Punkt eines Kreisbogens, wenn der Kreisbogen im mathematisch positiven Sinn durchlaufen wird. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der dimensionslose Schneckenaußenradius RA wird durch eine dünne, gestrichelte Linie charakterisiert, dessen Zahlenwert rechts unten in der Figur auf vier signifikante Stellen angegeben wird. Der dimensionslose Gehäuseinnenradius RG wird durch eine dünne, durchgezogene Linie charakterisiert, dessen Zahlenwert ebenfalls rechts unten in der Figur auf vier signifikante Stellen angegeben wird. Rechts neben den Figuren werden zu jedem Kreisbogen der zugehörige dimensionslose Radius R, der zugehörige Zentriwinkel a, die zugehörige dimensionslose x-Koordinate Mx des Kreisbogenmittelpunkts M und die zugehörige dimensionslose y-Koordinate My des Kreisbogenmittelpunkts M und die zugehörige dimensionslose x-Koordinate Ax des Anfangspunkts AP des Kreisbogens und die zugehörige dimensionslose y-Koordinate Ay des Anfangspunkts AP des Kreisbogens jeweils auf vier signifikante Stellen angegeben. Durch diese Angaben ist das Schneckenprofil eindeutig definiert. Außerdem ist in diesen Figuren jeweils der dimensionslose Schneckenaußenradius RA und der dimensionslose Gehäuseinnenradius RG angegeben.

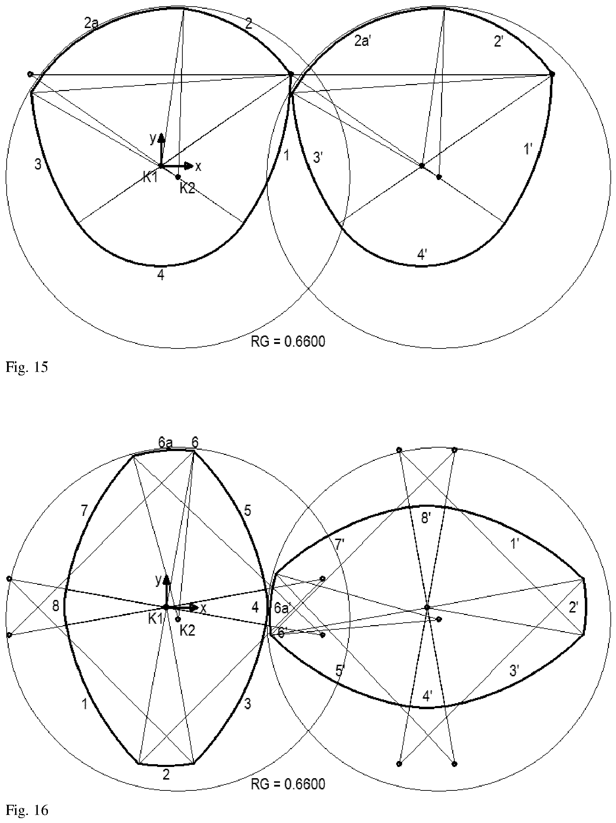

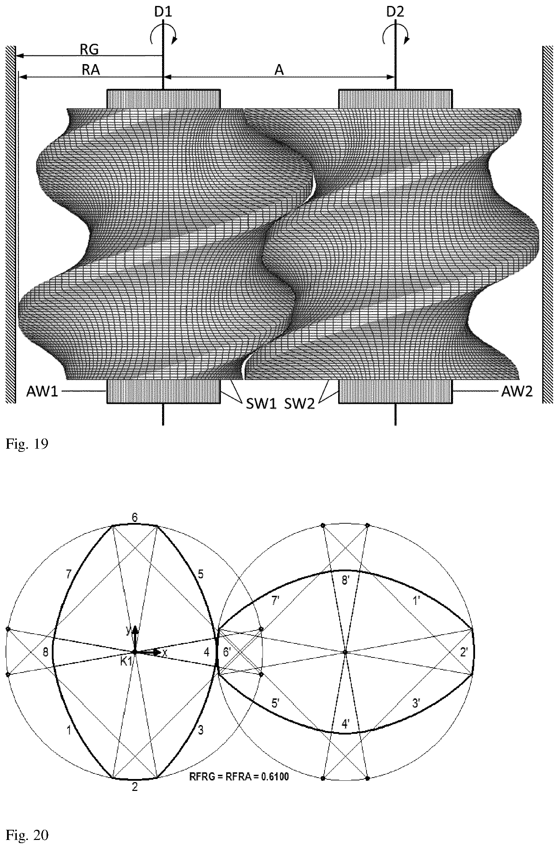

In den Figuren 15 bis 18 ist jeweils der dimensionslose Gehäuseinnenradius RG angegeben, in der Figur 20 ist dimensionslose Referenzgehäuseinnenradius RFRG und der dimensionslose Referenzschneckenaußenradius RFRA angegeben.

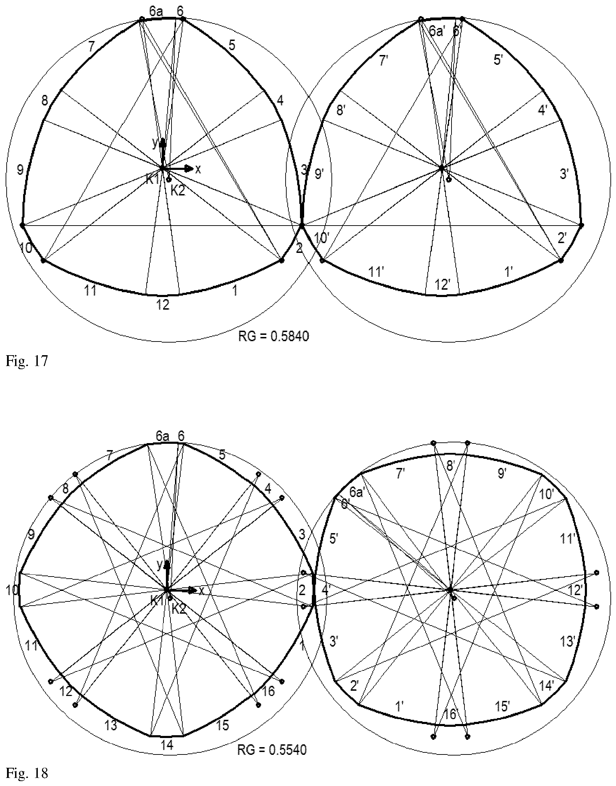

In den Figuren 15 und 17 sind jeweils sowohl beim linken als auch beim rechten Schneckenprofil die Kreisbögen mathematisch positiv durchnummeriert, bei den Figuren 16 und 18 sind jeweils beim linken Schneckenprofil die Kreisbögen mathematisch positiv durchnummeriert und jeweils beim rechten Schneckenprofil die Kreisbögen mathematisch negativ durchnummeriert.

**Figur 1a****:** Die Figur 1a zeigt ein Schneckenprofil mit der Nutzahl Z=1 gemäß dem Stand der Technik. Der dimensionslose Schneckenaußenradius beträgt RA = 0,61. Der dimensionslose Gehäuseinnenradius beträgt RG = 0,66. Der Konstruktionspunkt K1 liegt im Mittelpunkt M1 der Gehäusebohrung und damit im dazugehörigen Drehpunkt DP1.

Diese Ausführungsform ist nachteilig, da das Spiel zwischen dem Gehäuse und dem Schneckenkamm (Kreisbogen 2) groß ist und sich damit eine schlechte Reinigung des Gehäuses ergibt.

**Figur 1b****:** Das Schneckenprofil in Figur 1b ist durch Verschieben des Schneckenprofils aus Figur 1a erhalten worden. Die Verschiebung erfolgte so, dass der Endpunkt des Kreisbogens 2 entsprechend dem Anfangspunkt des Kreisbogens 3, der Konstruktionspunkt K1 und der Konstruktionspunkt K2 auf einer Geraden liegen. Der Konstruktionspunkt K2 liegt im Mittelpunkt M1 der Gehäusebohrung und damit im dazugehörigen Drehpunkt DP1. Der Endpunkt des Kreisbogens 2 entsprechend dem Anfangspunkt des Kreisbogens 3 liegt auf dem dimensionslosen Schneckenaußenradius RA. Der dimensionslose Schneckenaußenradius beträgt RA = 0,65. Der dimensionslose Gehäuseinnenradius beträgt RG = 0,66.

Diese Ausführungsform weist gegenüber der Ausführungsform nach Figur 1a ein enges Spiel zwischen dem Gehäuse und dem Endpunkt des Kreisbogens 2 auf, wodurch sich eine gute Reinigung des Gehäuses ergibt. Diese Ausführungsform ist jedoch dadurch nachteilig, dass das Spiel zwischen dem Gehäuse und dem Schneckenkamm (Kreisbogen 2) nicht konstant ist und sich dadurch je nach Drehrichtung ein konvergenter oder divergenter Kanal zwischen dem Gehäuse und dem Schneckenkamm (Kreisbogen 2) ergibt. Beim Drehen des Schneckenprofils in Uhrzeigersinn um den Konstruktionspunkt K2 wird Polymermasse in den konvergenten Kanal zwischen Gehäuse und dem Schneckenkamm (Kreisbogen 2) gepresst, wodurch große Druckkräfte auf das Schneckenelement wirken, die das Schneckenelement soweit aus dem Drehpunkt DP1 bewegen können, dass das Schneckenelement das Gehäuse berührt und/oder ein direkt benachbartes Schneckenelement und es dadurch zu einem mechanischen Verschleiß des Schneckenelements kommt.

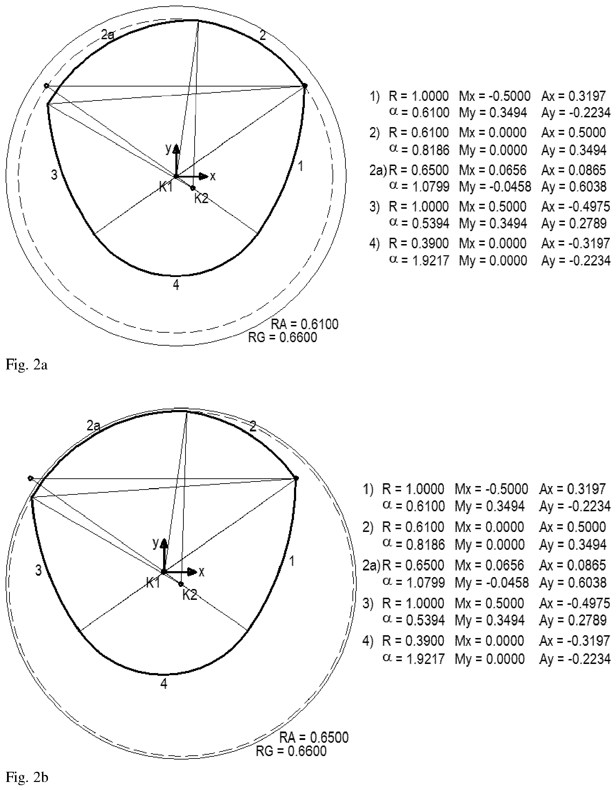

**Figur 2a****:** Die Figur 2a zeigt ein erfindungsgemäßes, geschlossenes Schneckenprofil mit der Nutzahl Z=1, welches sich aus 5 Kreisbögen zusammensetzt. Der dimensionslose Gehäuseinnenradius beträgt RG = 0,66. Der dimensionslose Schneckenaußenradius beträgt RA = 0,61. Das dimensionslose Spiel des Nebenkamms NKᵢ (Kreisbogen 2) zum Gehäuse beträgt C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,61, der gleich dem dimensionslosen Schneckenaußenradius RA ist. Der Zentriwinkel beträgt α_2 = 0,8186 ≈ 46,9°. Der Kreisbogen 2 stellt einen Nebenkamm NKᵢ dar, da die beiden direkt benachbarten Kreisbögen 1 und 2a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,39, der gleich dem dimensionslosen Kernradius RI ist. Der Zentriwinkel beträgt α_4 = 1,9217 ≈ 110,1°. Der Kreisbogen 4 stellt eine Nut dar, da die beiden direkt benachbarten Kreisbögen 1 und 3 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius gleich dem dimensionslosen Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 2a. Der Kreisbogen 2a besitzt einen dimensionslosen Radius R_2a = 0,65, der etwas kleiner als der dimensionslose Gehäuseinnenradius RG = 0,66 ist. Der Zentriwinkel beträgt α_2a = 1,0799 ≈ 61,9°. Der Kreisbogen 2a stellt den Hauptkamm HK dar, da die beiden direkt benachbarten Kreisbögen 2 und 3 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,121-fache des dimensionslosen Gehäuseinnenradius RG. Der kleinere Winkel zwischen der Winkelhalbierenden der Nut (Kreisbogen 4) und der Verbindungslinie zwischen K1 und K2 beträgt 55,1°. Der Konstruktionspunkt K1, der Konstruktionspunkt K2 und der Mittelpunkt des Kreisbogens 1 liegen auf einer Linie.

Die Kreisbögen 1 und 3 stellen Flanken dar. Die dimensionslosen Radien R_1 und R_3 der beiden Kreisbögen 1 und 3 betragen jeweils R_1 = R_3 = 1,00. Die Mittelpunkte dieser beiden Kreisbögen sind jeweils nicht identisch mit den Konstruktionspunkten K1 und K2.

Der Hauptkamm HK (Kreisbogen 2a) und der Nebenkamm NKᵢ (Kreisbogen 2) berühren sich. Der Hauptkamm HK und der Nebenkamm NKᵢ sind jeweils durch eine Flanke von der Nut getrennt.

**Figur 2b****:** Das Schneckenprofil in Figur 2b ist durch Verschieben des Schneckenprofils aus Figur 2a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 2a besitzt einen dimensionslosen Radius R_2a = 0,65, der gleich dem dimensionslosen Schneckenaußenradius RA ist. Das dimensionslose Spiel des Hauptkamms HK (Kreisbogen 2a) zum Gehäuse beträgt C_HK = 0,01. Der Konstruktionspunkt K1, der Konstruktionspunkt K2 und der Mittelpunkt des Kreisbogens 1 liegen auf einer Linie.

Diese Ausführungsform ist vorteilhaft, da sie ein konstantes, enges Spiel zwischen dem Gehäuse und dem Hauptkamms HK (Kreisbogen 2a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Hauptkamms HK (Kreisbogen 2) wesentlich kleiner ist als in der Ausführungsform nach Figur 1b. So ergibt sich bei Drehung im Uhrzeigersinn zwischen dem Gehäuse und dem Hauptkamms HK (Kreisbogen 2a) ein konvergenter Kanal, bei Drehung gegen den Uhrzeigersinn ein divergenter Kanal.

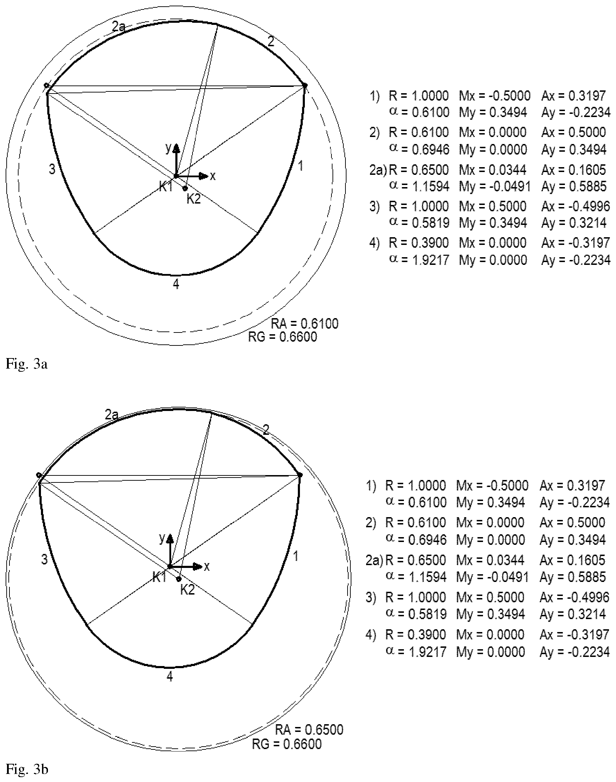

**Figur 3a****:** Die Figur 3a zeigt ein erfindungsgemäßes, geschlossenes Schneckenprofil mit der Nutzahl Z=1, welches sich aus 5 Kreisbögen zusammensetzt. Der dimensionslose Gehäuseinnenradius beträgt RG = 0,66. Der dimensionslose Schneckenaußenradius beträgt RA = 0,61. Das dimensionslose Spiel des Nebenkamms NKᵢ (Kreisbogen 2) zum Gehäuse beträgt C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,61, der gleich dem dimensionslose Schneckenaußenradius RA ist. Der Zentriwinkel beträgt α_2 = 0,6946 ≈ 39,8°. Der Kreisbogen 2 stellt einen Nebenkamm NKᵢ dar, da die beiden direkt benachbarten Kreisbögen 1 und 2a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,39, der gleich dem dimensionslose Kernradius RI ist. Der Zentriwinkel beträgt α_4 = 1,9217 ≈ 110,1°. Der Kreisbogen 4 stellt eine Nut dar, da die beiden direkt benachbarten Kreisbögen 1 und 3 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslose Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 2a. Der Kreisbogen 2a besitzt einen dimensionslosen Radius R_2a = 0,65, der etwas kleiner als der dimensionslose Gehäuseinnenradius RG = 0,66 ist. Der Zentriwinkel beträgt α_2a = 1,1594 ≈ 66,4°. Der Kreisbogen 2a stellt den Hauptkamm HK dar, da die beiden direkt benachbarten Kreisbögen 2 und 3 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,091-fache des Gehäuseinnenradius RG. Der kleinere Winkel zwischen der Winkelhalbierenden der Nut und der Verbindungslinie zwischen K1 und K2 beträgt 35,0°. Die Linie zwischen dem Konstruktionspunkt K1 und dem Mittelpunkt des Kreisbogens 1 und die Linie zwischen dem Konstruktionspunkt K2 und dem Anfangspunkt des Kreisbogens 3 sind in etwa parallel.

Die Kreisbögen 1 und 3 stellen Flanken dar. Der Radius der beiden Kreisbögen beträgt jeweils R_1 = R_3 = 1,00. Die Mittelpunkte dieser beiden Kreisbögen sind jeweils nicht identisch mit den Konstruktionspunkten K1 und K2.

Der Hauptkamm HK (Kreisbogen 2a) und der Nebenkamm NKᵢ (Kreisbogen 2) berühren sich. Der Hauptkamm und der Nebenkamm NKᵢ sind jeweils durch eine Flanke von der Nut getrennt.

**Figur 3b****:** Das Schneckenprofil in Figur 3b ist durch Verschieben des Schneckenprofils aus Figur 3a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 2a besitzt einen dimensionslosen Radius R_2a = 0,65, der gleich dem dimensionslose Schneckenaußenradius RA ist. Das dimensionslose Spiel des Hauptkamms HK (Kreisbogen 2a) zum Gehäuse beträgt C_HK = 0,01.

Diese Ausführungsform ist vorteilhaft, da sie ein konstantes, enges Spiel zwischen dem Gehäuse und dem Hauptkamm HK (Kreisbogen 2a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Nebenkamm NKᵢ (Kreisbogen 2) wesentlich kleiner ist als in der Ausführungsform nach Figur 1b. So ergibt sich bei Drehung im Uhrzeigersinn zwischen dem Gehäuse und dem Hauptkamms HK (Kreisbogen 2a) ein konvergenter Kanal, bei Drehung gegen den Uhrzeigersinn ein divergenter Kanal.

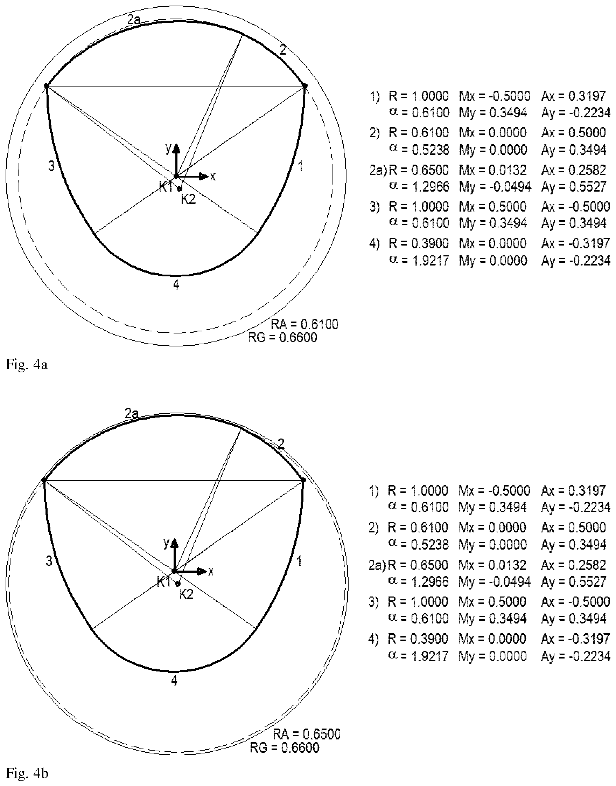

**Figur 4a****:** Die Figur 4a zeigt ein erfindungsgemäßes, geschlossenes Schneckenprofil mit der Nutzahl Z=1, welches sich aus 5 Kreisbögen zusammensetzt. Der dimensionslose Gehäuseinnenradius beträgt RG = 0,66. Der dimensionslose Schneckenaußenradius beträgt RA = 0,61. Das dimensionslose Spiel des Nebenkamms NKᵢ (Kreisbogen 2) zum Gehäuse beträgt C_NK = 0,05. Dabei ist der Mittelpunkt des Kreisbogens 1 gleich dem Anfangspunkt des Kreisbogens 3.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen Radius R_2 = 0,61, der gleich dem dimensionslosen Schneckenaußenradius RA ist. Der Zentriwinkel beträgt α_2 = 0,5238 ≈ 30,0°. Der Kreisbogen 2 stellt einen Nebenkamm NKᵢ dar, da die beiden direkt benachbarten Kreisbögen 1 und 2a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,39, der gleich dem dimensionslosen Kernradius RI ist. Der Zentriwinkel beträgt α_4 = 1,9217 ≈ 110,1°. Der Kreisbogen 4 stellt eine Nut dar, da die beiden direkt benachbarten Kreisbögen 1 und 3 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionslose Radius der Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 2a. Der Kreisbogen 2a besitzt einen dimensionslosen Radius R_2a = 0,65, der etwas kleiner als der dimensionslose Gehäuseinnenradius RG = 0,66 ist. Der Zentriwinkel beträgt α_2a = 1,2966 ≈ 74,3°. Der Kreisbogen 2a stellt den Hauptkamm HK dar, da die beiden direkt benachbarten Kreisbögen 2 und 3 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,077-fache des dimensionslosen Gehäuseinnenradius RG. Der kleinere Winkel zwischen der Winkelhalbierenden der Nut und der Verbindungslinie zwischen K1 und K2 beträgt 15,0°. Die Größe und die Lage des Kreisbogens 3 ist gegenüber der Figur 1a unverändert geblieben.

Die Kreisbögen 1 und 3 stellen Flanken dar. Der dimensionslose Radius der beiden Kreisbögen beträgt jeweils R_1 = R_3 = 1,00. Die Mittelpunkte dieser beiden Kreisbögen sind jeweils nicht identisch mit den Konstruktionspunkten K1 und K2.

Der Hauptkamm HK (Kreisbogen 2a) und der Nebenkamm NKᵢ (Kreisbogen 2) berühren sich. Der Hauptkamm HK und der Nebenkamm NKᵢ sind jeweils durch eine Flanke von der Nut getrennt.

**Figur 4b****:** Das Schneckenprofil in Figur 4b ist durch Verschieben des Schneckenprofils aus Figur 4a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 2a besitzt einen Radius R_2a = 0,65, der gleich dem dimensionslosen Schneckenaußenradius RA ist. Das dimensionslose Spiel des Hauptkamms HK (Kreisbogen 2a) zum Gehäuse beträgt C_HK = 0,01. Der Mittelpunkt von Kreis 1 entspricht dem Anfangspunkt von Kreis 3.

Diese Ausführungsform ist vorteilhaft, da sie ein konstantes, enges Spiel zwischen dem Gehäuse und dem Hauptkamm HK (Kreisbogen 2a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Nebenkamm NKᵢ (Kreisbogen 2) wesentlich kleiner ist als in der Ausführungsform nach Figur 1b. So ergibt sich bei Drehung im Uhrzeigersinn zwischen dem Gehäuse und dem Hauptkamms HK (Kreisbogen 2a) ein konvergenter Kanal, bei Drehung gegen den Uhrzeigersinn ein divergenter Kanal.

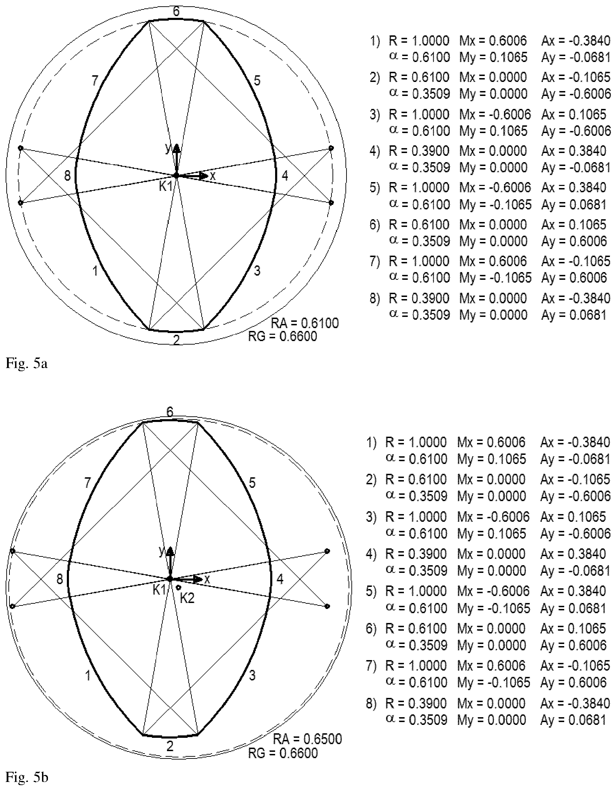

**Figur 5a****:** Die Figur 5a zeigt ein Schneckenprofil mit der Nutzahl Z=2 gemäß dem Stand der Technik. Der dimensionslose Schneckenaußenradius beträgt RA = 0,61. Der dimensionslose Gehäuseinnenradius beträgt RG = 0,66. Der Konstruktionspunkt K1 liegt im Mittelpunkt M1 der Gehäusebohrung und damit im dazugehörigen Drehpunkt DP1.

Diese Ausführungsform ist nachteilig, da das Spiel zwischen dem Gehäuse und einem ersten Kamm (Kreisbogen 2) sowie zwischen dem Gehäuse und einem zweiten Kamm (Kreisbogen 6) groß ist und sich damit eine schlechte Reinigung des Gehäuses ergibt.

**Figur 5b****:** Das Schneckenprofil in Figur 5b ist durch Verschieben des Schneckenprofils aus Figur 5a erhalten worden. Die Verschiebung erfolgte so, dass der kleinere Winkel zwischen der Winkelhalbierenden des Kreisbogens 8 und der Verbindungslinie zwischen dem Konstruktionspunkt K1 und dem Konstruktionspunkt K2 135° beträgt. Der Konstruktionspunkt K2 liegt im Mittelpunkt M1 der Gehäusebohrung und damit im dazugehörigen Drehpunkt DP1. Der Endpunkt des Kreisbogens 6 entsprechend dem Anfangspunkt des Kreisbogens 7 liegt auf dem dimensionslosen Schneckenaußenradius RA. Der dimensionslose Schneckenaußenradius beträgt RA = 0,65. Der dimensionslose Gehäuseinnenradius beträgt RG = 0,66.

Diese Ausführungsform weist gegenüber der Ausführungsform nach Figur 5a ein enges Spiel zwischen dem Gehäuse und dem Endpunkt des Kreisbogens 6 auf, wodurch sich eine gute Reinigung des Gehäuses ergibt. Diese Ausführungsform ist jedoch dadurch nachteilig, dass das Spiel zwischen dem Gehäuse und dem zweiten Kamm (Kreisbogen 6) nicht konstant ist und sich dadurch je nach Drehrichtung ein konvergenter oder divergenter Kanal zwischen dem Gehäuse und dem zweiten Kamm (Kreisbogen 6) ergibt. Beim Drehen des Schneckenprofils in Uhrzeigersinn um den Konstruktionspunkt K2 wird Polymermasse in den konvergenten Kanal zwischen Gehäuse und dem zweiten Kamm (Kreisbogen 6) gepresst, wodurch große Druckkräfte auf das Schneckenelement wirken, die das Schneckenelement soweit aus dem Drehpunkt DP1 bewegen können, dass das Schneckenelement das Gehäuse und/oder ein direkt benachbartes Schneckenelement berührt und es dadurch zu einem mechanischen Verschleiß des Schneckenelements kommt.

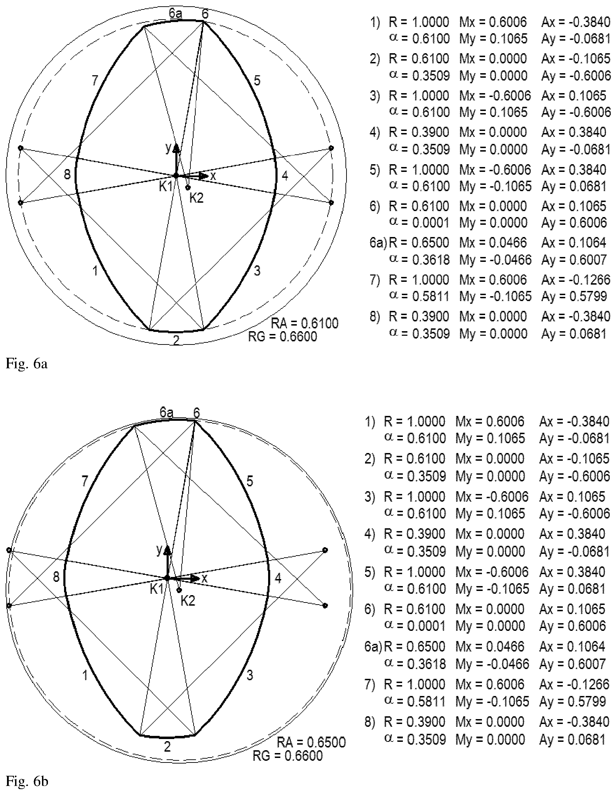

**Figur 6a****:** Die Figur 6a zeigt ein erfindungsgemäßes, geschlossenes Schneckenprofil mit der Nutzahl Z=2, welches sich aus 9 Kreisbögen zusammensetzt. Der dimensionslose Gehäuseinnenradius beträgt RG = 0,66. Der dimensionslose Schneckenaußenradius beträgt RA = 0,61. Das dimensionslose Spiel eines ersten Nebenkamms NK₁ (Kreisbogen 2) und eines zweiten Nebenkamms NK₂ (Kreisbogen 6) zum Gehäuse beträgt jeweils C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,61, der gleich dem dimensionslosen Schneckenaußenradius RA ist. Der Zentriwinkel beträgt α_2 = 0,3509 ≈ 20,1°. Der Kreisbogen 2 stellt einen Nebenkamm NKᵢ dar, da die beiden direkt benachbarten Kreisbögen 1 und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen Radius R_6= 0,61, der gleich dem dimensionslosen Schneckenaußenradius RA ist. Der Zentriwinkel beträgt α_6 = 0,0001 ≈ 0,006°. Der Kreisbogen 6 stellt einen Nebenkamm NKᵢ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen Radius R_4 = 0,39, der gleich dem dimensionslosen Kernradius RI ist. Der Zentriwinkel beträgt α_4 = 0,3509 ≈ 20,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen Radius R_8 = 0,39, der gleich dem dimensionslosen Kernradius RI ist. Der Zentriwinkel beträgt α_8 = 0,3509 ≈ 20,1°. Der Kreisbogen 8 stellt eine Nut dar, da die beiden direkt benachbarten Kreisbögen 1 und 7 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen Radius der dimensionslose Kernradius ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,65, der etwas kleiner als der dimensionslosen Gehäuseinnenradius RG = 0,66 ist. Der Zentriwinkel beträgt a_6a = 0,3618 ≈ 20,7°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,100-fache des dimensionslosen Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 135,0°.

Die Kreisbögen 1, 3, 5 und 7 stellen Flanken dar. Der dimensionslosen Radius der vier Kreisbögen beträgt jeweils R_1 = R_3 = R_5 = R_7 = 1,00. Die Mittelpunkte dieser vier Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2) und der zweite Nebenkamm NK₂ (Kreisbogen 6) sind jeweils durch eine Flanke von einer Nut getrennt.

**Figur 6b****:** Das Schneckenprofil in Figur 6b ist durch Verschieben des Schneckenprofils aus Figur 6a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 6a besitzt einen dimensionslosen Radius R_6a = 0,65, der gleich dem dimensionslosen Schneckenaußenradius RA ist. Das dimensionslose Spiel des Hauptkamms HK (Kreisbogen 6a) zum Gehäuse beträgt C_HK = 0,01.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Nebenkamm NKᵢ (Kreisbogen 6) im Gegensatz zur Figur 5b praktisch gleich Null ist. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

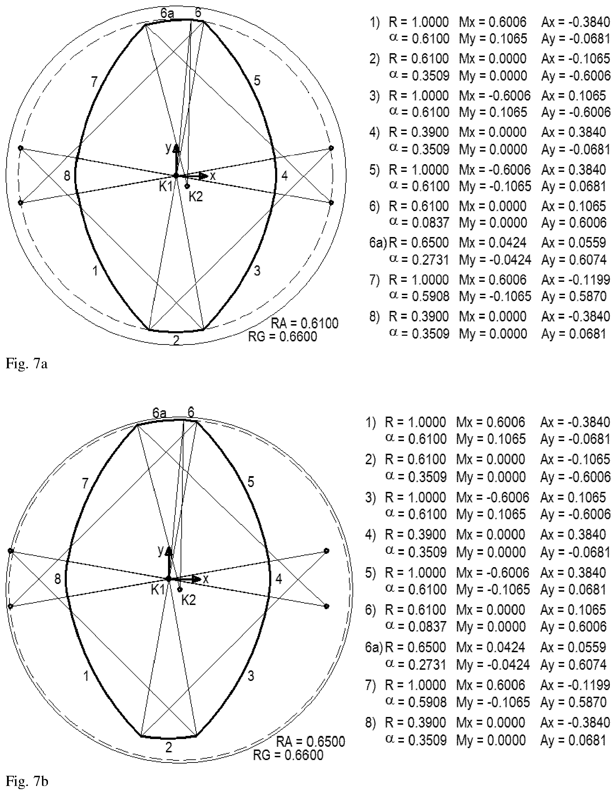

**Figur 7a****:** Die Figur 7a zeigt ein erfindungsgemäßes, geschlossenes Schneckenprofil mit der Nutzahl Z=2, welches sich aus 9 Kreisbögen zusammensetzt. Der dimensionslose Gehäuseinnenradius beträgt RG = 0,66. Der dimensionslose Schneckenaußenradius beträgt RA = 0,61. Das dimensionslose Spiel eines ersten Nebenkamms NK₁ (Kreisbogen 2) und eines zweiten Nebenkamms NK₂ (Kreisbogen 6) zum Gehäuse beträgt jeweils C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,61, der gleich dem dimensionslosen Schneckenaußenradius RA ist. Der Zentriwinkel beträgt α_2 = 0,3509 ≈ 20,1°. Der Kreisbogen 2 stellt einen Nebenkamm NKᵢ dar, da die beiden direkt benachbarten Kreisbögen 1 und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslosen Radius R_6= 0,61, der gleich dem dimensionslosen Schneckenaußenradius RA ist. Der Zentriwinkel beträgt α_6 = 0,0837 ≈ 4,8°. Der Kreisbogen 6 stellt einen Nebenkamm NKᵢ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,39, der gleich dem dimensionslosen Kernradius RI ist. Der Zentriwinkel beträgt α_4 = 0,3509 ≈ 20,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen dimensionslosen Radius R_8 = 0,39, der gleich dem dimensionslosen Kernradius RI ist. Der Zentriwinkel beträgt α_8 = 0,3509 ≈ 20,1°. Der Kreisbogen 8 stellt eine Nut dar, da die beiden direkt benachbarten Kreisbögen 1 und 7 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen Radius der dimensionslose Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,65, der etwas kleiner als der dimensionslose Gehäuseinnenradius RG = 0,66 ist. Der Zentriwinkel beträgt a_6a = 0,2731 ≈ 15,6°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,091-fache des dimensionslosen Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 135,0°.

Die Kreisbögen 1, 3, 5 und 7 stellen Flanken dar. Der Radius der vier Kreisbögen beträgt jeweils R_1 = R_3 = R_5 = R_7 = 1,00. Die Mittelpunkte dieser vier Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2) und der zweite Nebenkamm NK₂ (Kreisbogen 6) sind jeweils durch eine Flanke von einer Nut getrennt.

**Figur 7b****:** Das Schneckenprofil in Figur 7b ist durch Verschieben des Schneckenprofils aus Figur 7a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 6a besitzt einen dimensionslosen Radius R_6a = 0,65, der gleich dem dimensionslosen Schneckenaußenradius RA ist. Das dimensionslose Spiel des Hauptkamms HK (Kreisbogen 6a) zum Gehäuse beträgt C_HK = 0,01.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Nebenkamm NKᵢ (Kreisbogen 6) wesentlich kleiner ist als in der Ausführungsform nach Figur 5b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

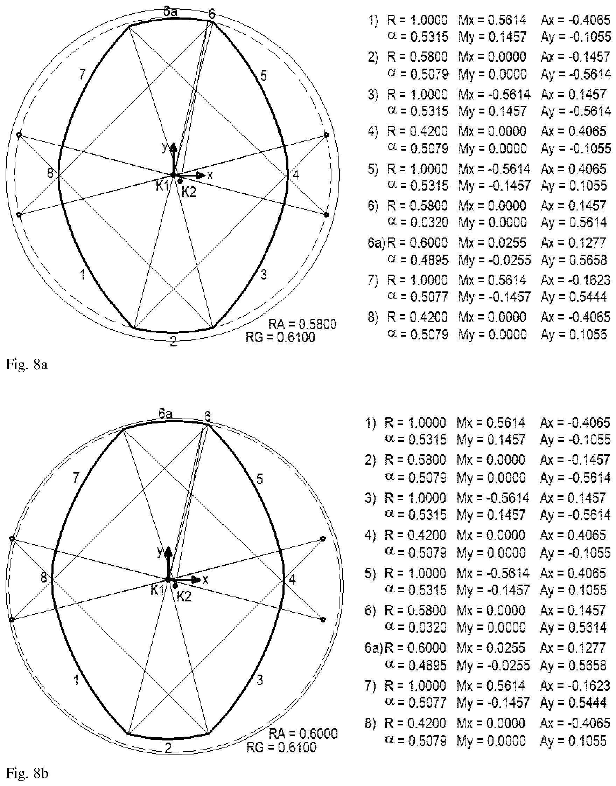

**Figur 8a****:** Die Figur 8a zeigt ein erfindungsgemäßes, geschlossenes Schneckenprofil mit der Nutzahl Z=2, welches sich aus 9 Kreisbögen zusammensetzt. Der Gehäuseinnenradius beträgt RG = 0,61. Der dimensionslose Schneckenaußenradius beträgt RA = 0,58. Das dimensionslose Spiel eines ersten Nebenkamms NK₁ (Kreisbogen 2) und eines zweiten Nebenkamms NK₂ (Kreisbogen 6) zum Gehäuse beträgt C_NK = 0,03.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,58, der gleich dem dimensionslosen Schneckenaußenradius RA ist. Der Zentriwinkel beträgt α_2 = 0,5079 ≈ 29,1°. Der Kreisbogen 2 stellt einen Nebenkamm NKᵢ dar, da die beiden direkt benachbarten Kreisbögen 1 und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslose Radius R_6= 0,58, der gleich dem Schneckenaußenradius RA ist. Der Zentriwinkel beträgt α_6 = 0,0320 ≈ 1,9°. Der Kreisbogen 6 stellt einen Nebenkamm NKᵢ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,42, der gleich dem dimensionslosen Kernradius RI ist. Der Zentriwinkel beträgt α_4 = 0,5079 ≈ 29,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen dimensionslose Radius R_8 = 0,42, der gleich dem dimensionslosen Kernradius RI ist. Der Zentriwinkel beträgt α_8 = 0,5079 ≈ 29,1°. Der Kreisbogen 8 stellt eine Nut dar, da die beiden direkt benachbarten Kreisbögen 1 und 7 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslose Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,60, der etwas kleiner als der Gehäuseinnenradius RG = 0,61 ist. Der Zentriwinkel beträgt a_6a = 0,4895 ≈ 28,0°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,055-fache des Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 135,0°.

Die Kreisbögen 1, 3, 5 und 7 stellen Flanken dar. Der dimensionslose Radius der vier Kreisbögen beträgt jeweils R_1 = R_3 = R_5 = R_7 = 1,00. Die Mittelpunkte dieser vier Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2) und der zweite Nebenkamm NK₂ (Kreisbogen 6) sind jeweils durch eine Flanke von einer Nut getrennt.

Figur 8b: Das Schneckenprofil in Figur 8b ist durch Verschieben des Schneckenprofils aus Figur 8a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,61. Der dimensionslose Schneckenaußenradius beträgt RA = 0,60. Der Kreisbogen 6a besitzt einen dimensionslose Radius R_6a = 0,60, der gleich dem dimensionslosen Schneckenaußenradius RA ist. Das dimensionslose Spiel des Hauptkamms HK (Kreisbogen 6a) zum Gehäuse beträgt C_HK = 0,01.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Nebenkamm NKᵢ (Kreisbogen 6) wesentlich kleiner ist als in der Ausführungsform nach Figur 5b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

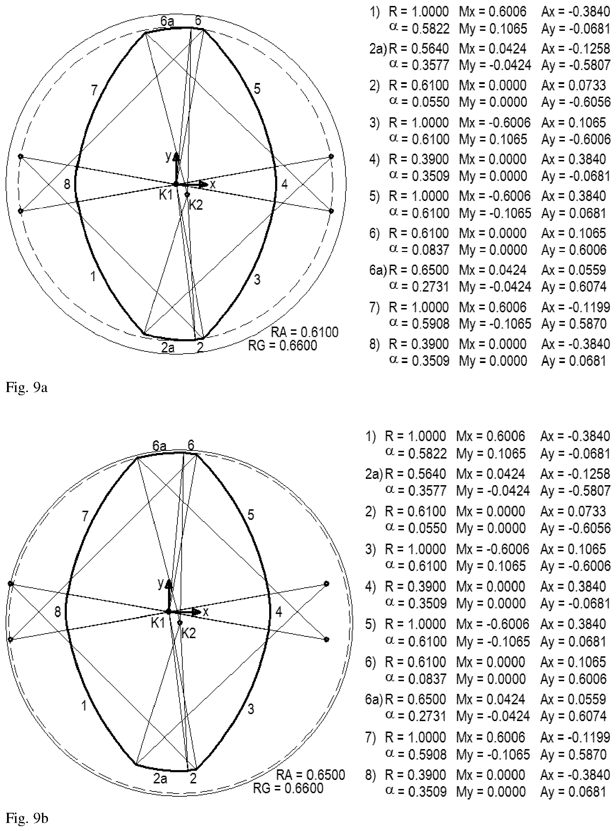

**Figur 9a****:** Die Figur 9a zeigt ein erfindungsgemäßes, geschlossenes Schneckenprofil mit der Nutzahl Z=2, welches sich aus 10 Kreisbögen zusammensetzt. Der dimensionslose Gehäuseinnenradius beträgt RG = 0,66. Der dimensionslose Schneckenaußenradius beträgt RA = 0,61. Das dimensionslose Spiel eines ersten Nebenkamms NK₁ (Kreisbogen 2) und eines zweiten Nebenkamms NK₂ (Kreisbogen 6) zum Gehäuse beträgt C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslose Radius R_2 = 0,61, der gleich dem dimensionslose Schneckenaußenradius RA ist. Der Zentriwinkel beträgt α_2 = 0,0550 ≈ 3,2°. Der Kreisbogen 2 stellt einen Nebenkamm NKᵢ dar, da die beiden direkt benachbarten Kreisbögen 2a und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslosen Radius R_6= 0,61, der gleich dem dimensionslosen Schneckenaußenradius RA ist. Der Zentriwinkel beträgt α_6 = 0,0837 ≈ 4,8°. Der Kreisbogen 6 stellt einen Nebenkamm NKᵢ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen Radius R_4 = 0,39, der gleich dem dimensionslosen Kernradius RI ist. Der Zentriwinkel beträgt α_4 = 0,3509 ≈ 20,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen Radius R_8 = 0,39, der gleich dem dimensionslosen Kernradius RI ist. Der Zentriwinkel beträgt α_8 = 0,3509 ≈ 20,1°. Der Kreisbogen 8 stellt eine Nut dar, da die beiden direkt benachbarten Kreisbögen 1 und 7 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslose Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 2a. Der Kreisbogen 2a besitzt einen dimensionslosen Radius R_2a = 0,564, der kleiner als der dimensionslose Schneckenaußenradius RA = 0,61 ist. Der Zentriwinkel beträgt α_2a = 0,3577 ≈ 20,5°. Der Kreisbogen 2a stellt einen Nebenkamm NKᵢ dar, da die beiden direkt benachbarten Kreisbögen 1 und 2 bis auf den gemeinsamen Berührpunkt einen kleineren Abstand zum Konstruktionspunkt K2 besitzen und der Kreisbogen 6a einen größeren Abstand zum Konstruktionspunkt K2 besitzt. Der Konstruktionspunkt K2 ist der Mittelpunkt des Kreisbogens 6a. Der Kreisbogen 6a besitzt einen dimensionslosen Radius R_6a = 0,65, der etwas kleiner als der dimensionslose Gehäuseinnenradius RG = 0,66 ist. Der Zentriwinkel beträgt a_6a = 0,2731 ≈ 15,6°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen und der Kreisbogen 2a einen kleineren Abstand zum Konstruktionspunkt K2 besitzt.

Der Abstand zwischen dem Konstruktionspunkt K2 und dem Konstruktionspunkt K1 beträgt etwa das 0,091-fache des dimensionslosen Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 135,0°.

Die Kreisbögen 1, 3, 5 und 7 stellen Flanken dar. Der dimensionslose Radius der vier Kreisbögen beträgt jeweils R_1 = R_3 = R_5 = R_7 = 1,00. Die Mittelpunkte dieser vier Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2) und der zweite Nebenkamm NK₂ (Kreisbogen 6) sind jeweils durch eine Flanke von einer Nut getrennt.

**Figur 9b****:** Das Schneckenprofil in Figur 9b ist durch Verschieben des Schneckenprofils aus Figur 9a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 6a besitzt einen dimensionslosen Radius R_6a = 0,65, der gleich dem dimensionslose Schneckenaußenradius RA ist. Das dimensionslose Spiel des Hauptkamms HK (Kreisbogen 6a) zum Gehäuse beträgt C_HK = 0,01.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist weiterhin vorteilhaft, da sie ein konstantes Spiel zwischen dem Gehäuse und einem ersten Nebenkamm NK₁ (Kreisbogen 2a) aufweist. Diese Ausführungsform ist ferner vorteilhaft, weil die Längen der konvergenten oder divergenten Kanäle - je nach Drehrichtung - zwischen dem Gehäuse und dem Nebenkamm NK (Kreisbogen 2) und einem zweiten Nebenkamm NK₂ (Kreisbogen 6) wesentlich kleiner sind als in der Ausführungsform nach Figur 5b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

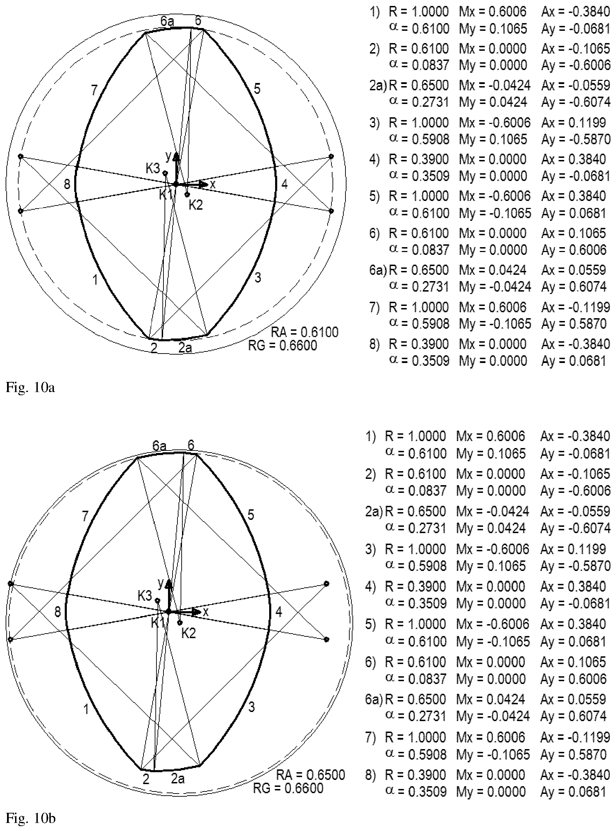

**Figur 10a****:** Die Figur 10a zeigt ein erfindungsgemäßes, geschlossenes Schneckenprofil mit der Nutzahl Z=2, welches sich aus 10 Kreisbögen zusammensetzt. Der dimensionslose Gehäuseinnenradius beträgt RG = 0,66. Der dimensionslose Schneckenaußenradius beträgt RA = 0,61. Das Spiel eines ersten Nebenkamms NK₁ (Kreisbogen 2) und eines zweiten Nebenkamms NK₂ (Kreisbogen 6) zum Gehäuse beträgt jeweils C_NK = 0,05.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 eine Punktsymmetrie auf. Der Konstruktionspunkt K1 ist der Mittelpunkt des Kreisbogens 2. Der Kreisbogen 2 besitzt einen dimensionslosen Radius R_2 = 0,61, der gleich dem dimensionslose Schneckenaußenradius RA ist. Der Zentriwinkel beträgt α_2 = 0,0837 ≈ 4,8°. Der Kreisbogen 2 stellt einen Nebenkamm NK₁ dar, da die beiden direkt benachbarten Kreisbögen 2a und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslosen Radius R_6= 0,61, der gleich dem dimensionslose Schneckenaußenradius RA ist. Der Zentriwinkel beträgt α_6 = 0,0837 ≈ 4,8°. Der Kreisbogen 6 stellt einen Nebenkamm NK₂ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,39, der gleich dem dimensionslose Kernradius RI ist. Der Zentriwinkel beträgt α_4 = 0,3509 ≈ 20,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen dimensionslose Radius R_8 = 0,39, der gleich dem dimensionslose Kernradius RI ist. Der Zentriwinkel beträgt α_8 = 0,3509 ≈ 20,1°. Der Kreisbogen 8 stellt eine Nut dar, da die beiden direkt benachbarten Kreisbögen 1 und 7 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslose Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,65, der etwas kleiner als der dimensionslose Gehäuseinnenradius RG = 0,66 ist. Der Zentriwinkel beträgt a_6a = 0,2731 ≈ 15,6°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Das Schneckenprofil enthält einen Konstruktionspunkt K3, der den gleichen Abstand zum Konstruktionspunkt K1 aufweist wie der Konstruktionspunkt K2 und wobei die Konstruktionspunkte K1, K2 und K3 auf einer Geraden liegen und K1, K2 und K3 nicht identisch sind. Das Schneckenprofil weist bezogen auf den Konstruktionspunkt K3 keine Achsensymmetrie und keine Punktsymmetrie auf. Der Konstruktionspunkt K3 ist der Mittelpunkt des Kreisbogens 2a. Der Kreisbogen 2a besitzt einen dimensionslosen Radius R_2a = 0,65, der etwas kleiner als der dimensionslose Gehäuseinnenradius RG = 0,66 ist. Der Zentriwinkel beträgt α_2a = 0,2731 ≈ 15,6°. Der Kreisbogen 2a stellt einen Nebenkamm NK₃ dar, da die beiden direkt benachbarten Kreisbögen 2 und 3 bis auf den gemeinsamen Berührpunkt einen kleineren Abstand zum Konstruktionspunkt K3 besitzen.

Der Abstand zwischen dem Konstruktionspunkt K2 und dem Konstruktionspunkt K1 beträgt etwa das 0,091-fache des dimensionslose Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 135,0°.

Die Kreisbögen 1, 3, 5 und 7 stellen Flanken dar. Der dimensionslose Radius der vier Kreisbögen beträgt jeweils R_1 = R_3 = R_5 = R_7 = 1,00. Die Mittelpunkte dieser vier Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2) und der zweite Nebenkamm NK₂ (Kreisbogen 6) sind jeweils durch eine Flanke von einer Nut getrennt.

Das Schneckenprofil weist bezogen auf den Konstruktionspunkt K1 keine Achsensymmetrie, aber eine Punktsymmetrie auf. Dadurch lässt sich das Schneckenprofil besonders einfach konstruieren.

**Figur 10b****:** Das Schneckenprofil in Figur 10b ist durch Verschieben des Schneckenprofils aus Figur 10a erhalten worden. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,66. Der dimensionslose Schneckenaußenradius beträgt RA = 0,65. Der Kreisbogen 6a besitzt einen dimensionslosen Radius R_6a = 0,65, der gleich dem dimensionslosen Schneckenaußenradius RA ist. Das dimensionslose Spiel des Hauptkamms (Kreisbogen 6a) zum Gehäuse beträgt C_HK = 0,01.

Diese Ausführungsform ist vorteilhaft, da sie ein konstantes, enges Spiel zwischen dem Gehäuse und dem Hauptkamm (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Hauptkamm (Kreisbogen 6) wesentlich kleiner ist als in der Ausführungsform nach Figur 5b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

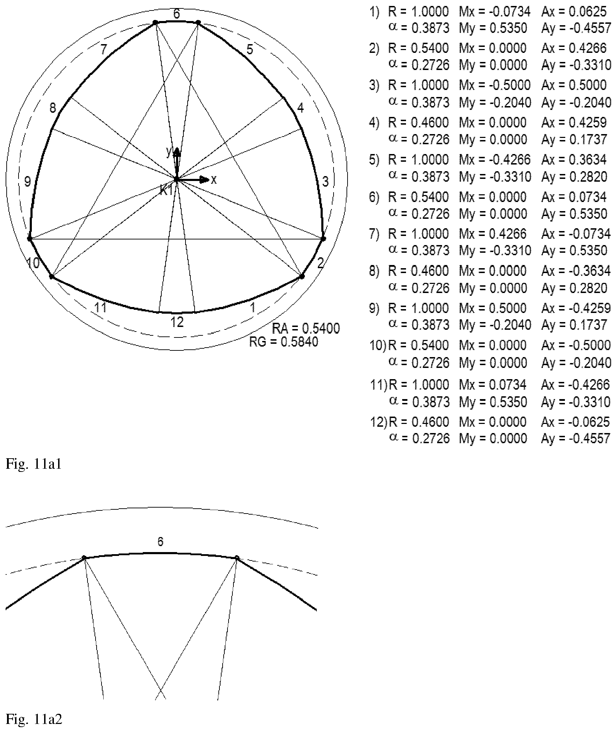

**Figur 11a****:** Die Figur 11a1 zeigt ein Schneckenprofil mit der Nutzahl Z=3 gemäß dem Stand der Technik und Figur 11a2 eine Ausschnittsvergrößerung um Kreisbogen 6 der Figur 11a1. Der dimensionslose Schneckenaußenradius beträgt RA = 0,54. Der dimensionslose Gehäuseinnenradius beträgt RG = 0,584. Der Konstruktionspunkt K1 liegt im Mittelpunkt M1 der Gehäusebohrung und damit im dazugehörigen Drehpunkt DP1.

Diese Ausführungsform ist nachteilig, da das Spiel zwischen dem Gehäuse und einem ersten Kamm (Kreisbogen 2) sowie zwischen dem Gehäuse und einem zweiten Kamm (Kreisbogen 6) sowie zwischen dem Gehäuse und einem dritten Kamm (Kreisbogen 10) groß ist und sich damit eine schlechte Reinigung des Gehäuses ergibt.

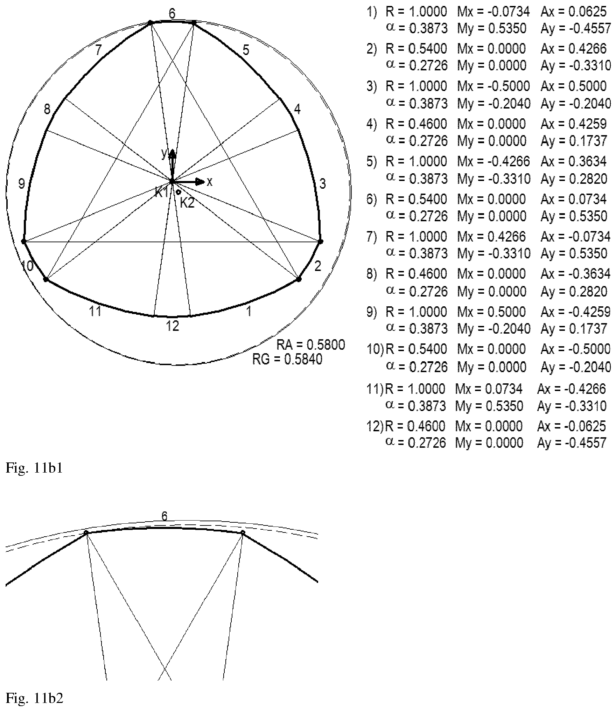

**Figur 11b****:** Das Schneckenprofil in Figur 11b1 ist durch Verschieben des Schneckenprofils aus Figur 11a1 erhalten worden; Figur 11b2 zeigt eine Ausschnittvergrößerung um Kreisbogen 6 der Figur 11b1. Die Verschiebung erfolgte so, dass der kleinere Winkel zwischen der Winkelhalbierenden des Kreisbogens 8 und der Verbindungslinie zwischen dem Konstruktionspunkt K1 und dem Konstruktionspunkt K2 150° beträgt. Der Konstruktionspunkt K2 liegt im Mittelpunkt M1 der Gehäusebohrung und damit im dazugehörigen Drehpunkt DP1. Der Endpunkt des Kreisbogens 6 entsprechend dem Anfangspunkt des Kreisbogens 7 liegt auf dem dimensionslosen Schneckenau-βenradius RA, der Anfangspunkt von Kreisbogen 6 liegt nicht auf dem dimensionslosen Schneckenaußenradius RA. Der dimensionslose Schneckenaußenradius beträgt RA = 0,58. Der dimensionslose Gehäuseinnenradius beträgt RG = 0,584.

Diese Ausführungsform weist gegenüber der Ausführungsform nach Figur 11a1 ein enges Spiel zwischen dem Gehäuse und dem Endpunkt des Kreisbogens 6 auf, wodurch sich eine gute Reinigung des Gehäuses ergibt. Diese Ausführungsform ist jedoch dadurch nachteilig, dass das Spiel zwischen dem Gehäuse und dem zweiten Kamm (Kreisbogen 6) nicht konstant ist und sich dadurch je nach Drehrichtung ein konvergenter oder divergenter Kanal zwischen dem Gehäuse und dem zweiten Kamm (Kreisbogen 6) ergibt. So ergibt sich bei Drehung im Uhrzeigersinn zwischen dem Gehäuse und dem Hauptkamms HK (Kreisbogen 6) ein konvergenter Kanal, bei Drehung gegen den Uhrzeigersinn ein divergenter Kanal.

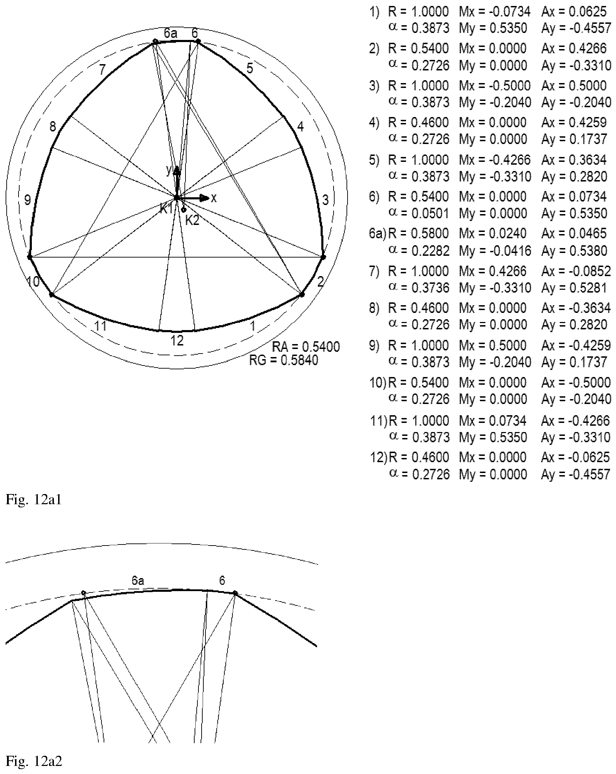

**Figur 12a****:** Die Figur 12a1 zeigt ein erfindungsgemäßes, geschlossenes Schneckenprofil mit der Nutzahl Z=3, welches sich aus 13 Kreisbögen zusammensetzt und Figur 12a2 eine Ausschnittvergrößerung um Kreisbogen 6 und Kreisbogen 6a der Figur 12a1. Der dimensionslose Gehäuseinnenradius beträgt RG = 0,584. Der dimensionslose Schneckenaußenradius beträgt RA = 0,54. Das dimensionslose Spiel eines ersten Nebenkamms NK₁ (Kreisbogen 2), eines zweiten Nebenkamms NK₂ (Kreisbogen 6) und eines dritten Nebenkamms NK₃ (Kreisbogen 10) zum Gehäuse beträgt jeweils C_NK = 0,044.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,54, der gleich dem dimensionslosen Schneckenaußenradius RA ist. Der Zentriwinkel beträgt α_2 = 0,2726 ≈ 15,6°. Der Kreisbogen 2 stellt einen Nebenkamm NK₁ dar, da die beiden direkt benachbarten Kreisbögen 1 und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslosen Radius R_6= 0,54, der gleich dem dimensionslosen Schneckenaußenradius RA ist. Der Zentriwinkel beträgt α_6 = 0,0501 ≈ 2,9°. Der Kreisbogen 6 stellt einen Nebenkamm NK₂ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 10. Der Kreisbogen 10 besitzt einen dimensionslosen Radius R_10 = 0,54, der gleich dem dimensionslosen Schneckenaußenradius RA ist. Der Zentriwinkel beträgt a_10 = 0,2726 ≈ 15,6°. Der Kreisbogen 10 stellt einen Nebenkamm NK₃ dar, da die beiden direkt benachbarten Kreisbögen 9 und 11 bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,46, der gleich dem dimensionslosen Kernradius RI ist. Der Zentriwinkel beträgt α_4 = 0,2726 ≈ 15,6°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen Radius R_8 = 0,46, der gleich dem dimensionslosen Kernradius RI ist. Der Zentriwinkel beträgt α_8 = 0, 2726 ≈ 15,6°. Der Kreisbogen 8 stellt eine Nut dar, da die beiden direkt benachbarten Kreisbögen 7 und 9 bis auf den gemeinsamen Berührpunkt einen größeren Abstand zum Konstruktionspunkt K1 besitzen. Konstruktionspunkt K1 ist der Mittelpunkt des Kreisbogens 12. Der Kreisbogen 12 besitzt einen Radius R_12 = 0,46, der gleich dem dimensionslosen Kernradius RI ist. Der Zentriwinkel beträgt a_12 = 0, 2726 ≈ 15,6°. Der Kreisbogen 12 stellt eine Nut dar, da die beiden direkt benachbarten Kreisbögen 1 und 11 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslosen Kernradius RI ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,58, der etwas kleiner als der dimensionslosen Gehäuseinnenradius RG = 0,584 ist. Der Zentriwinkel beträgt a_6a = 0,2282 ≈ 13,1°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Der Abstand zwischen dem Konstruktionspunkt K2 und dem Konstruktionspunkt K1 beträgt etwa das 0,073-fache des Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 150,0°.

Die Kreisbögen 1, 3, 5, 7, 9 und 11 stellen Flanken dar. Der dimensionslose Radius der sechs Kreisbögen beträgt jeweils R_1 = R_3 = R_5 = R_7 = R_9 = R_11 = 1,00. Die Mittelpunkte dieser sechs Kreisbögen sind jeweils nicht identisch mit den Konstruktionspunkten K1 und K2.

Der Hauptkamm HK (Kreisbogen 6a) und der Nebenkamm NK₂ (Kreisbogen 6) berühren sich. Der Hauptkamm HK (Kreisbogen 6a), der erste Nebenkamm NK₁ (Kreisbogen 2), der zweite Nebenkamm NK₂ (Kreisbogen 6) und der dritte Nebenkamm NK₃ (Kreisbogen 10) sind jeweils durch eine Flanke von einer Nut getrennt.

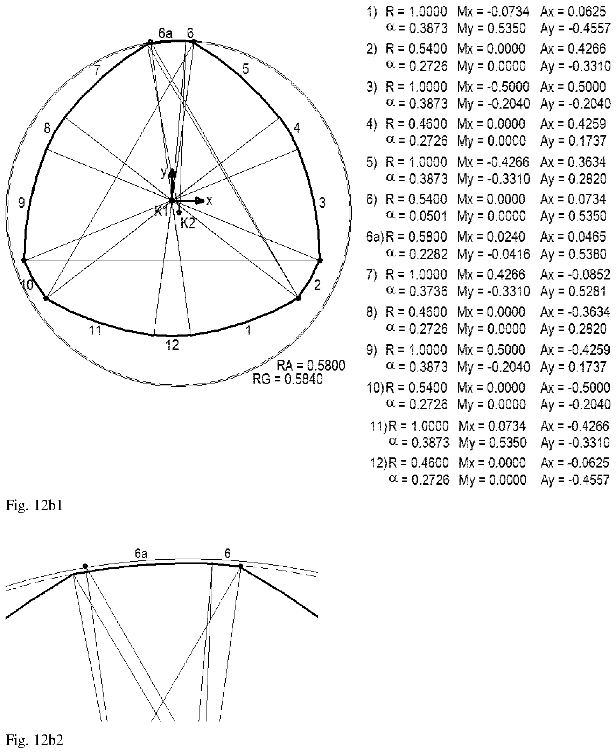

**Figur 12b****:** Das Schneckenprofil in Figur 12b1 ist durch Verschieben des Schneckenprofils aus Figur 12a1 erhalten worden; Figur 12b2 zeigt eine Ausschnittvergrößerung um Kreisbogen 6 und Kreisbogen 6a der Figur 12b1. Die Verschiebung erfolgte so, dass der Konstruktionspunkt K2 im Mittelpunkt M1 der Gehäusebohrung und damit im dazugehörigen Drehpunkt DP1 liegt. Der Gehäuseinnenradius beträgt RG = 0,584. Der dimensionslose Schneckenaußenradius beträgt RA = 0,58. Der Kreisbogen 6a besitzt einen dimensionslosen Radius R_6a = 0,58, der gleich dem dimensionslosen Schneckenaußenradius RA ist. Das dimensionslose Spiel des Hauptkamms HK (Kreisbogen 6a) zum Gehäuse beträgt C_HK = 0,004.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Hauptkamm (Kreisbogen 6) wesentlich kleiner ist als in der Ausführungsform nach Figur 11b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

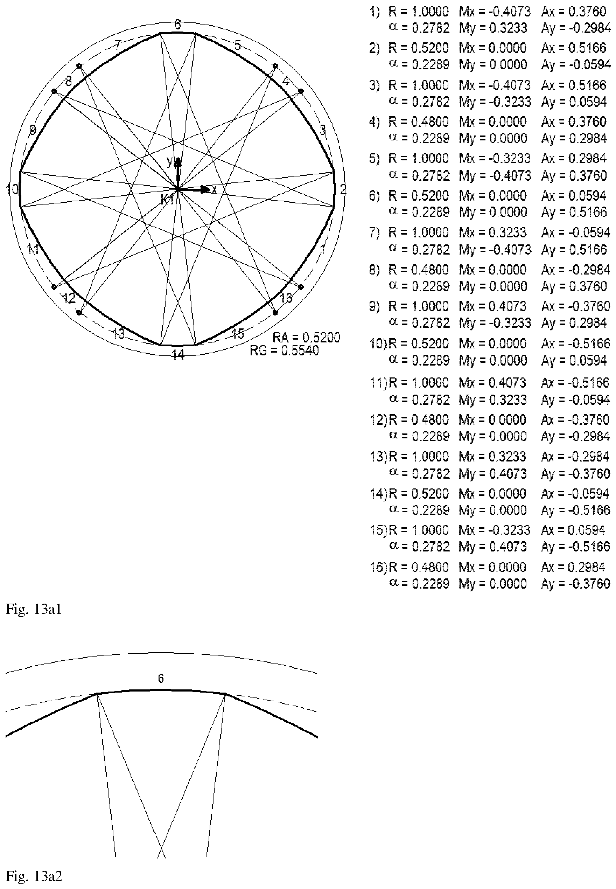

**Figur 13a****:** Die Figur 13a1 zeigt ein Schneckenprofil mit der Nutzahl Z=4 gemäß dem Stand der Technik und Figur 13a2 eine Ausschnittvergrößerung um Kreisbogen 6 der Figur 13a1. Der dimensionslose Schneckenaußenradius beträgt RA = 0,52. Der dimensionslose Gehäuseinnenradius beträgt RG = 0,554. Der Konstruktionspunkt K1 liegt im Mittelpunkt M1 der Gehäusebohrung und damit im dazugehörigen Drehpunkt DP1.

Diese Ausführungsform ist nachteilig, da das Spiel zwischen dem Gehäuse und einem ersten Kamm (Kreisbogen 2) sowie zwischen dem Gehäuse und einem zweiten Kamm (Kreisbogen 6) sowie zwischen dem Gehäuse und einem dritten Kamm (Kreisbogen 10) sowie zwischen dem Gehäuse und einem vierten Kamm (Kreisbogen 14) groß ist und sich damit eine schlechte Reinigung des Gehäuses ergibt.

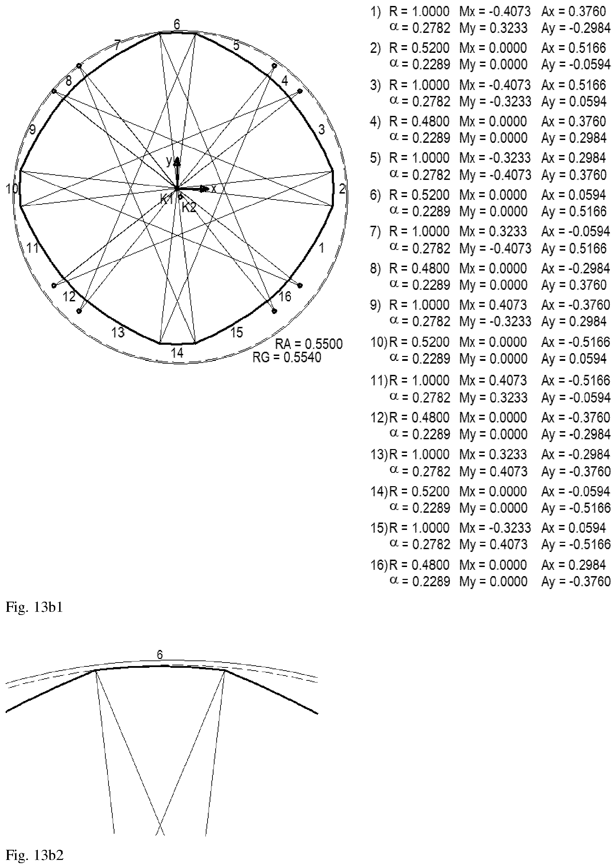

**Figur 13b****:** Das Schneckenprofil in Figur 13b1 ist durch Verschieben des Schneckenprofils aus Figur 13a1 erhalten worden; Figur 13b2 zeigt eine Ausschnittvergrößerung um Kreisbogen 6 der Figur 13b1. Die Verschiebung erfolgte so, dass der kleinere Winkel zwischen der Winkelhalbierenden des Kreisbogens 8 und der Verbindungslinie zwischen dem Konstruktionspunkt K1 und dem Konstruktionspunkt K2 157,5° beträgt. Der Konstruktionspunkt K2 liegt im Mittelpunkt M1 der Gehäusebohrung und damit im dazugehörigen Drehpunkt DP1. Der Endpunkt des Kreisbogens 6 entsprechend dem Anfangspunkt des Kreisbogens 7 liegt auf dem dimensionslosen Schneckenaußenradius RA, der Anfangspunkt von Kreisbogen 6 liegt nicht auf dem dimensionslosen Schneckenaußenradius RA. Der dimensionslosen Schneckenaußenradius beträgt RA = 0,55. Der dimensionslosen Gehäuseinnenradius beträgt RG = 0,554.

Diese Ausführungsform weist gegenüber der Ausführungsform nach Figur 13a1 ein enges Spiel zwischen dem Gehäuse und dem Endpunkt des Kreisbogens 6 auf, wodurch sich eine gute Reinigung des Gehäuses ergibt. Diese Ausführungsform ist jedoch dadurch nachteilig, dass das Spiel zwischen dem Gehäuse und dem zweiten Kamm (Kreisbogen 6) nicht konstant ist und sich dadurch je nach Drehrichtung ein konvergenter oder divergenter Kanal zwischen dem Gehäuse und dem zweiten Kamm (Kreisbogen 6) ergibt. So ergibt sich bei Drehung im Uhrzeigersinn zwischen dem Gehäuse und dem Hauptkamms HK (Kreisbogen 6) ein konvergenter Kanal, bei Drehung gegen den Uhrzeigersinn ein divergenter Kanal.

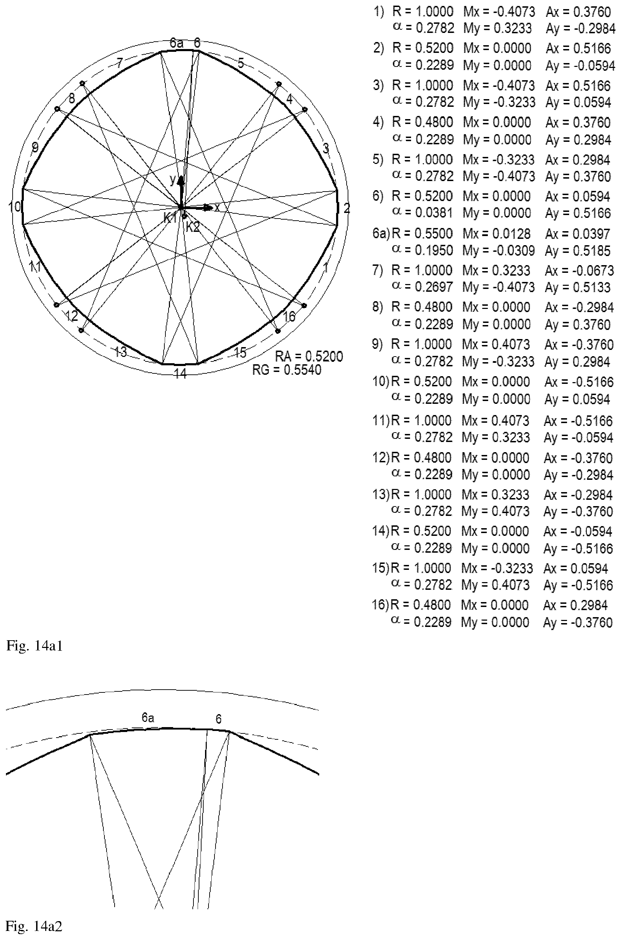

**Figur 14a****:** Die Figur 14a1 zeigt ein erfindungsgemäßes, geschlossenes Schneckenprofil mit der Nutzahl Z=4, welches sich aus 17 Kreisbögen zusammensetzt; Figur 14a2 zeigt eine Ausschnittvergrößerung um Kreisbogen 6 und Kreisbogen 6a der Figur 14a1. Der dimensionslose Gehäuseinnenradius beträgt RG = 0,554. Der Schneckenaußenradius beträgt RA = 0,52. Das Spiel eines ersten Nebenkamms NK₁ (Kreisbogen 2), eines zweiten Nebenkamms NK₂ (Kreisbogen 6), eines dritten Nebenkamms NK₃ (Kreisbogen 10) und eines vierten Nebenkamms NK₄ (Kreisbogen 14) zum Gehäuse beträgt jeweils C_NK = 0,034.

Das Schneckenprofil enthält einen Konstruktionspunkt K1, der im Mittelpunkt M1 der Gehäusebohrung liegt und damit im dazugehörigen Drehpunkt DP1. Das Schneckenprofil weist bezogen auf den Konstruktionspunkt K1 keine Achsensymmetrie und keine Punktsymmetrie auf. Der Konstruktionspunkt K1 ist der Mittelpunkt des Kreisbogens 2. Der Kreisbogen 2 besitzt einen dimensionslosen Radius R_2 = 0,52, der gleich dem dimensionslosen Schneckenaußenradius RA ist. Der Zentriwinkel beträgt α_2 = 0,2289 ≈ 13,1°. Der Kreisbogen 2 stellt einen Nebenkamm NK₁ dar, da die beiden direkt benachbarten Kreisbögen 1 und 3 bis auf den gemeinsamen Berührpunkt einen kleineren Abstand zum Konstruktionspunkt K1 besitzen. Der Konstruktionspunkt K1 ist der Mittelpunkt des Kreisbogens 6. Der Kreisbogen 6 besitzt einen dimensionslosen Radius R_6= 0,52, der gleich dem dimensionslosen Schneckenaußenradius RA ist. Der Zentriwinkel beträgt α_6 = 0,0381 ≈ 2,2°. Der Kreisbogen 6 stellt einen Nebenkamm NK₂ dar, da die beiden direkt benachbarten Kreisbögen 5 und 6a bis auf den gemeinsamen Berührpunkt einen kleineren Abstand zum Konstruktionspunkt K1 besitzen. Der Konstruktionspunkt K1 ist der Mittelpunkt des Kreisbogens 10. Der Kreisbogen 10 besitzt einen dimensionslosen Radius R_10 = 0,52, der gleich dem dimensionslosen Schneckenaußenradius RA ist. Der Zentriwinkel beträgt α_10 = 0,2289 ≈ 13,1°. Der Kreisbogen 10 stellt einen Nebenkamm NK₃ dar, da die beiden direkt benachbarten Kreisbögen 9 und 11 bis auf den gemeinsamen Berührpunkt einen kleineren Abstand zum Konstruktionspunkt K1 besitzen. Der Konstruktionspunkt K1 ist der Mittelpunkt des Kreisbogens 14. Der Kreisbogen 14 besitzt einen dimensionslosen Radius R_14 = 0,52, der gleich dem dimensionslosen Schneckenaußenradius RA ist. Der Zentriwinkel beträgt a_14 = 0,2289 ≈ 13,1°. Der Kreisbogen 14 stellt einen Nebenkamm NK₄ dar, da die beiden direkt benachbarten Kreisbögen 13 und 15 bis auf den gemeinsamen Berührpunkt einen kleineren Abstand zum Konstruktionspunkt K1 besitzen. Der Konstruktionspunkt K1 ist der Mittelpunkt des Kreisbogens 4. Der Kreisbogen 4 besitzt einen dimensionslosen Radius R_4 = 0,48, der gleich dem dimensionslosen Kernradius ist. Der Zentriwinkel beträgt α_4 = 0,2289 ≈ 13,1°. Der Kreisbogen 4 stellt eine Nut dar, da die beiden direkt benachbarten Kreisbögen 3 und 5 bis auf den gemeinsamen Berührpunkt einen größeren Abstand zum Konstruktionspunkt K1 besitzen. Der Konstruktionspunkt K1 ist der Mittelpunkt des Kreisbogens 8. Der Kreisbogen 8 besitzt einen dimensionslosen Radius R_8 = 0,48, der gleich dem dimensionslosen Kernradius ist. Der Zentriwinkel beträgt α_8 = 0,2289 ≈ 13,1°. Der Kreisbogen 8 stellt eine Nut dar, da die beiden direkt benachbarten Kreisbögen 7 und 9 bis auf den gemeinsamen Berührpunkt einen größeren Abstand zum Konstruktionspunkt K1 besitzen. Der Konstruktionspunkt K1 ist der Mittelpunkt des Kreisbogens 12. Der Kreisbogen 12 besitzt einen dimensionslosen Radius R_12 = 0,48, der gleich dem dimensionslosen Kernradius ist. Der Zentriwinkel beträgt a_12 = 0,2289 ≈ 13,1°. Der Kreisbogen 12 stellt eine Nut dar, da die beiden direkt benachbarten Kreisbögen 11 und 13 bis auf den gemeinsamen Berührpunkt einen größeren Abstand zum Konstruktionspunkt K1 besitzen. Der Konstruktionspunkt K1 ist der Mittelpunkt des Kreisbogens 16. Der Kreisbogen 16 besitzt einen dimensionslosen Radius R_16 = 0,48, der gleich dem dimensionslosen Kernradius ist. Der Zentriwinkel beträgt a_16 = 0,2289 ≈ 13,1°. Der Kreisbogen 16 stellt eine Nut dar, da die beiden direkt benachbarten Kreisbögen 1 und 15 bis auf den gemeinsamen Berührpunkt einen größeren Abstand zum Konstruktionspunkt K1 besitzen.

Das Schneckenprofil enthält einen Konstruktionspunkt K2, der nicht mit dem Konstruktionspunkt K1 zusammenfällt und der innerhalb des Schneckenprofils liegt und der zudem innerhalb eines Kreises liegt, dessen Mittelpunkt der Konstruktionspunkt K1 ist und dessen dimensionsloser Radius der dimensionslose Kernradius ist. Das Schneckenprofil weist bezogen auf den Konstruktionspunkt K2 keine Achsensymmetrie und keine Punktsymmetrie auf. Der Konstruktionspunkt K2 ist der Mittelpunkt des Kreisbogens 6a. Der Kreisbogen 6a besitzt einen dimensionslosen Radius R_6a = 0,55, der etwas kleiner als der dimensionslose Gehäuseinnenradius RG = 0,554 ist. Der Zentriwinkel beträgt a_6a = 0,1950 ≈ 11,2°. Der Kreisbogen 6a stellt den Hauptkamm HK dar, da die beiden direkt benachbarten Kreisbögen 6 und 7 bis auf den gemeinsamen Berührpunkt einen kleineren Abstand zum Konstruktionspunkt K2 besitzen.

Der dimensionslosen Abstand zwischen dem Konstruktionspunkt K2 und dem Konstruktionspunkt K1 beträgt etwa das 0,051-fache des dimensionslosen Gehäuseinnenradius RG. Der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 beträgt 157,5°.

Die Kreisbögen 1, 3, 5, 7, 9, 11, 13 und 15 stellen Flanken dar. Der dimensionslose Radius der acht Kreisbögen beträgt jeweils R_1 = R_3 = R_5 = R_7 = R_9 = R_11 = R_13 = R_15 = 1,00. Die Mittelpunkte dieser acht Kreisbögen sind jeweils nicht identisch mit den Konstruktionspunkten K1 und K2.

Der Hauptkamm HK (Kreisbogen 6a) und der zweite Nebenkamm NK₂ (Kreisbogen 6) berühren sich. Der Hauptkamm HK, der erste Nebenkamm NK₁ (Kreisbogen 2), der zweite Nebenkamm NK₂ (Kreisbogen 6), der dritte Nebenkamm NK₃ (Kreisbogen 10) und der vierte Nebenkamm NK₄ (Kreisbogen 14) sind jeweils durch eine Flanke von einer Nut getrennt.

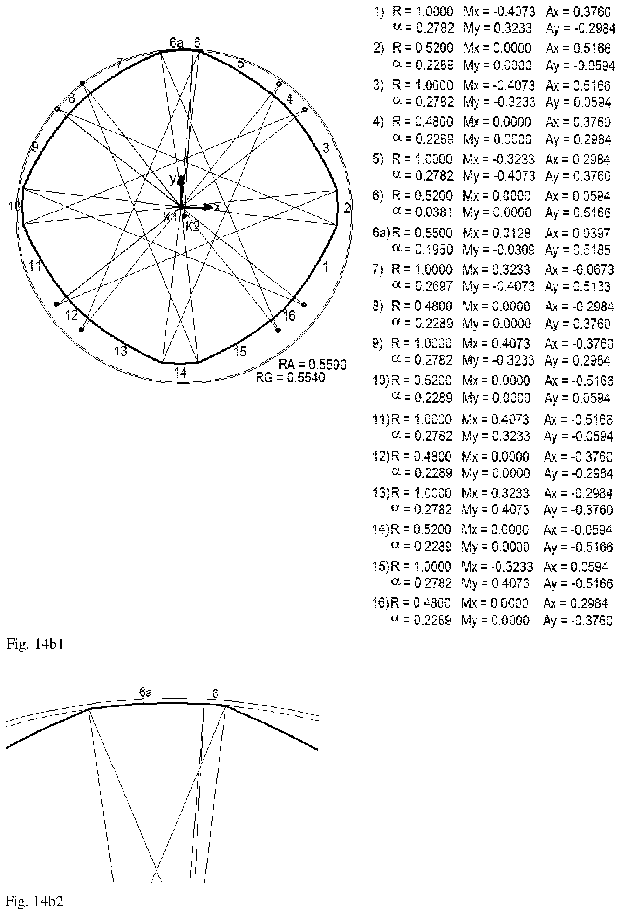

**Figur 14b****:** Das Schneckenprofil in Figur 14b1 ist durch Verschieben des Schneckenprofils aus Figur 14a erhalten worden; Fig. 14b2 zeigt eine Ausschnittvergrößerung um Kreisbogen 6 und Kreisbogen 6a der Fig. 14b1. Die Verschiebung erfolgte so, dass der Konstruktionspunkt K2 im Mittelpunkt M1 der Gehäusebohrung und damit im dazugehörigen Drehpunkt DP1 liegt. Der dimensionslose Gehäuseinnenradius beträgt RG = 0,554. Der dimensionslose Schneckenaußenradius beträgt RA = 0,55. Der Kreisbogen 6a besitzt einen dimensionslosen Radius R_6a = 0,55, der gleich dem dimensionslosen Schneckenaußenradius RA ist. Das dimensionslose Spiel des Hauptkamms HK (Kreisbogen 6a) zum Gehäuse beträgt C_HK = 0,004.

Diese Ausführungsform ist vorteilhaft, da sie ein konstantes, enges Spiel zwischen dem Gehäuse und dem Hauptkamm HK (Kreisbogen 6a) aufweist, wodurch sich eine gute Reinigung des Gehäuses ergibt. Diese Ausführungsform ist ferner vorteilhaft, weil die Länge des konvergenten oder divergenten Kanal - je nach Drehrichtung - zwischen dem Gehäuse und dem Hauptkamm (Kreisbogen 6) wesentlich kleiner ist als in der Ausführungsform nach Figur 13b. So ergibt sich bei Drehung im Uhrzeigersinn zwischen dem Gehäuse und dem Hauptkamms HK (Kreisbogen 6a) ein konvergenter Kanal, bei Drehung gegen den Uhrzeigersinn ein divergenter Kanal.

Die Figuren 1 bis 14 zeigen Schneckenprofile mit Nutzahlen Z von 1 bis einschließlich 4, in denen der dimensionslose Schneckenaußenradius RA verschiedene diskrete Werte aufweist. Die erfindungsgemäßen Schneckenelemente sind nicht auf diese diskreten Werte des Schneckenaußenradius limitiert. Schneckenprofile der Nutzahl 1 oder der Nutzahl 2 können einen dimensionslosen Schneckenaußenradius im Bereich von RA = 0,57 bis RA = 0,67, bevorzugt im Bereich von RA = 0,59 bis RA = 0,65 aufweisen, wenn der Konstruktionspunkt K1 im Mittelpunkt M1 der Gehäusebohrung und damit im dazugehörigen Drehpunkt DP1 liegt. Schneckenprofile der Nutzahl 3 können einen Schneckenaußenradius im Bereich von RA = 0,515 bis RA = 0,56, bevorzugt im Bereich von RA = 0,525 bis RA = 0,55 aufweisen, wenn der Konstruktionspunkt K1 im Mittelpunkt M1 der Gehäusebohrung und damit im dazugehörigen Drehpunkt DP1 liegt. Schneckenprofile der Nutzahl 4 können einen Schneckenaußenradius im Bereich von RA = 0,51 bis RA = 0,535, bevorzugt im Bereich von RA = 0,515 bis RA = 0,53 aufweisen, wenn der Konstruktionspunkt K1 im Mittelpunkt M1 der Gehäusebohrung und damit im dazugehörigen Drehpunkt DP1 liegt.

Wenn der Konstruktionspunkt K1 im Mittelpunkt M1 der Gehäusebohrung und damit im dazugehörigen Drehpunkt DP1 liegt, ist der dimensionslose Schneckenaußenradius RA 0,2% bis 10%, bevorzugt 0,4% bis 7,5%, besonders bevorzugt 0,6% bis 5%, ganz besonders bevorzugt etwa 0,8% bis 2,5% kleiner als der dimensionslose Gehäuseinnenradius RG. Wenn also der Konstruktionspunkt K1 im Mittelpunkt M1 der Gehäusebohrung und damit im dazugehörigen Drehpunkt DP1 liegt, beträgt das dimensionslose Spiel C_NK zwischen einem Nebenkamm NKᵢ und dem Gehäuse 0,2% bis 10%, bevorzugt 0,4% bis 7,5%, besonders bevorzugt 0,6% bis 5%, ganz besonders bevorzugt etwa 0,8% bis 2,5% vom dimensionslosen Gehäuseinnenradius RG. Bei mehreren Nebenkämmen NK₁ bis NKₙ können diese gleiche oder unterschiedliche dimensionslose Spiel C_NK aufweisen.

Wenn der Konstruktionspunkt K2 im Mittelpunkt M1 der Gehäusebohrung und damit im dazugehörigen Drehpunkt DP1 liegt, ist der dimensionslose Schneckenaußenradius RA 0,1% bis 3,2%, bevorzugt 0,2% bis 2,6%, besonders bevorzugt 0,3% bis 2,0%, ganz besonders bevorzugt etwa 0,4% bis 1,4% kleiner als der dimensionslose Gehäuseinnenradius RG. Wenn also der Konstruktionspunkt K2 im Mittelpunkt M1 der Gehäusebohrung und damit im dazugehörigen Drehpunkt DP1 liegt, beträgt das dimensionslosen Spiel C_HK zwischen dem Hauptkamm HK und dem Gehäuse 0,1% bis 3,2%, bevorzugt 0,2% bis 2,6%, besonders bevorzugt 0,3% bis 2,0%, ganz besonders bevorzugt etwa 0,4% bis 1,4% vom dimensionslosen Gehäuseinnenradius RG.

Über den Abstand des Konstruktionspunktes K2 vom Konstruktionspunkt K1 und über den kleineren Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 kann die Lage des Hauptkamms HK und die Größe seines Zentriwinkels und damit das Schneckenprofil bzw. das Schneckenelement mit diesem Schneckenprofil an die Verfahrensaufgaben in einer zweiwelligen Schneckenmaschine angepasst werden. So ist beispielsweise bei dem Profil gemäß Figur 6a der Abstand (das 0,1-fache des Gehäuseinnenradius) und der kleinere Winkel (135°) zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 so gewählt worden, dass der Kreisbogen 6 beinahe nicht mehr vorhanden ist. In der Figur 7a ist der Abstand zwischen K1 und K2 auf das 0,091-fache des Gehäuseinnenradius reduziert worden, wodurch sich der Zentriwinkel des Kreisbogens 6 vergrößert und sich der Zentriwinkel des Kreisbogens 6a, der den Hauptkamm HK darstellt, verkleinert. Würde man in der Figur 6a den Abstand zwischen K1 und K2 auf mehr als das 0,1-fache des Gehäuseinnenradius vergrößern, so würde der Kreisbogen 6 vollständig aus dem Schneckenprofil verschwinden. In diesem Fall müsste der Schnittpunkt zwischen den Kreisbögen 5 und 6a ermittelt werden, um die Zentriwinkel der Kreisbögen 5 und 6a bestimmen zu können. Für Schneckenprofil mit der Nutzahl Z=3 oder der Nutzahl Z=4 gilt das oben ausgeführte in analoger Weise.

Falls das Schneckenprofil einen Nebenkamm NKᵢ aufweist, der aus einem Kreisbogen gebildet wird, dessen Mittelpunkt der Konstruktionspunkt K2 oder der Konstruktionspunkt K3 ist, so kann der Nebenkamm NKᵢ über die Lage des Konstruktionspunktes K2 oder des Konstruktionspunktes K3 und den Radius des Kreisbogens, der den Nebenkamm NKᵢ bildet, an die Verfahrensaufgaben einer zweiwelligen Schneckenmaschine angepasst werden. In der Figur 9a bildet der Kreisbogen 2a, dessen Mittelpunkt der Konstruktionspunkt K2 ist, einen entsprechenden Nebenkamm NKᵢ. Würde man in der Figur 9a den Radius des Kreisbogens 2a verkleinern, so würde sich der Zentriwinkel des Kreisbogens 2a vergrößern. Bei einem hinreichend kleinen Radius des Kreisbogens 2a würde der Kreisbogen 2 vollständig aus dem Schneckenprofil verschwinden. In diesem Fall müsste der Schnittpunkt zwischen den Kreisbögen 2a und 3 ermittelt werden, um die Zentriwinkel der Kreisbögen 2a und 3 bestimmen zu können. In der Figur 10a bildet der Kreisbogen 2a, dessen Mittelpunkt der Konstruktionspunkt K3 ist, einen entsprechenden Nebenkamm NKᵢ. Würde man in der Figur 10a den Radius des Kreisbogens 2a verkleinern, so würde sich der Zentriwinkel des Kreisbogens 2a vergrößern. Bei einem hinreichend kleinen Radius des Kreisbogens 2a würde der Kreisbogen 2 vollständig aus dem Schneckenprofil verschwinden. In diesem Fall müsste der Schnittpunkt zwischen den Kreisbögen 1 und 2a ermittelt werden, um die Zentriwinkel der Kreisbögen 1 und 2a bestimmen zu können.

Die Figuren 1 bis 14 zeigen Schneckenprofile mit Nutzahlen von Z=1 bis einschließlich Z=4, in denen der Abstand zwischen den Konstruktionspunkten K1 und K2 verschiedene diskrete Werte aufweist. Die erfindungsgemäßen Schneckenelemente sind nicht auf diese diskreten Werte limitiert. Der Abstand vom Konstruktionspunkt K1 zum Konstruktionspunkt K2 beträgt 0,2% bis 20%, bevorzugt 0,4% bis 15%, besonders bevorzugt 0,6% bis 10% und ganz besonders bevorzugt 0,8% bis 5% vom dimensionslosen Gehäuseinnenradius RG.

Die Figuren 1 bis 14 zeigen Schneckenprofile mit Nutzahlen von Z=1 bis einschließlich Z=4, in denen der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 verschiedene diskrete Werte aufweist. Die erfindungsgemäßen Schneckenelemente sind nicht auf diese diskreten Werte limitiert. Bei einer Nutzahl von Z=1 liegt der kleinere Winkel zwischen der Winkelhalbierenden der Nut und der Verbindungslinie zwischen K1 und K2 im Bereich von 0° bis 90°, bevorzugt im Bereich von 45° bis 70° und beträgt besonders bevorzugt etwa 55°. Bei einer Nutzahl von Z=2 liegt der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 im Bereich von 110° bis 160°, bevorzugt im Bereich von 125° bis 145° und beträgt besonders bevorzugt etwa 135°. Bei einer Nutzahl von Z=3 liegt der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 im Bereich von 130° bis 170°, bevorzugt im Bereich von 140° bis 160° und beträgt besonders bevorzugt etwa 150°. Bei einer Nutzahl von Z=4 liegt der kleinere Winkel zwischen der Winkelhalbierenden der Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 im Bereich von 140° bis 175°, bevorzugt im Bereich von 150° bis 165° und beträgt besonders bevorzugt etwa 157,5°.

Die Figuren 1 bis 14 zeigen Schneckenprofile mit Nutzahlen von Z=1 bis einschließlich Z=4, in denen die Zentriwinkel der Kreisbögen, die eine Nut bilden, verschiedene diskrete Werte aufweisen. Die erfindungsgemäßen Schneckenelemente sind nicht auf diese diskreten Werte limitiert. Bei einer Nutzahl von Z=1 weist der Kreisbogen, der die Nut bildet, einen Zentriwinkel von 90° bis 150°, bevorzugt von 95° bis 140°, besonders bevorzugt von 100° bis 130° auf. Bei einer Nutzahl von Z=2 weisen die Kreisbögen, die die Nuten bilden, jeweils einen Zentriwinkel von 5° bis 50°, bevorzugt von 10° bis 40°, besonders bevorzugt von 15° bis 30° auf. Bei einer Nutzahl von Z=3 weisen die Kreisbögen, die die Nuten bilden, jeweils einen Zentriwinkel von 3° bis 30°, bevorzugt von 6° bis 24°, besonders bevorzugt von 9° bis 18° auf. Bei einer Nutzahl von Z=4 weisen die Kreisbögen, die die Nuten bilden, jeweils einen Zentriwinkel von 2° bis 20°, bevorzugt von 4° bis 16°, besonders bevorzugt von 6° bis 12° auf.

Die Figuren 1 bis 14 zeigen Schneckenprofile mit Nutzahlen von Z=1 bis einschließlich Z=4, in denen der Zentriwinkel des Kreisbogens, der den Hauptkamm HK bildet, verschiedene diskrete Werte aufweist. Die erfindungsgemäßen Schneckenelemente sind nicht auf diese diskreten Werte limitiert. In einem ersten Fall kann beispielsweise einer der beiden benachbarten Kreisbögen des Hauptkamms HK ein Nebenkamm NKᵢ sein. In einem zweiten Fall kann es beispielsweise sein, dass keiner der beiden direkt benachbarten Kreisbögen des Hauptkamms HK ein Nebenkamm NKᵢ ist. Bei einer Nutzahl von Z=1 weist der Kreisbogen, der den Hauptkamm HK bildet, im ersten Fall einen Zentriwinkel von 10° bis 150°, bevorzugt von 30° bis 140°, besonders bevorzugt von 50° bis 130° auf. Bei einer Nutzahl von Z=1 weist der Kreisbogen, der den Hauptkamm HK bildet, im zweiten Fall einen Zentriwinkel von 90° bis 150°, bevorzugt von 95° bis 140°, besonders bevorzugt von 100° bis 130° auf. Bei einer Nutzahl von 2 weist der Kreisbogen, der den Hauptkamm HK bildet, im ersten Fall einen Zentriwinkel von 5° bis 50°, bevorzugt von 10° bis 40°, besonders bevorzugt von 15° bis 30° auf. Bei einer Nutzahl von 2 weist der Kreisbogen, der den Hauptkamm HK bildet, im zweiten Fall einen Zentriwinkel von 5° bis 50°, bevorzugt von 10° bis 40°, besonders bevorzugt von 15° bis 30° auf. Bei einer Nutzahl von 3 weist der Kreisbogen, der den Hauptkamm HK bildet, im ersten Fall einen Zentriwinkel von 3° bis 30°, bevorzugt von 6° bis 24°, besonders bevorzugt von 9° bis 18° auf. Bei einer Nutzahl von 3 weist der Kreisbogen, der den Hauptkamm HK bildet, im zweiten Fall einen Zentriwinkel von 3° bis 30°, bevorzugt von 6° bis 24°, besonders bevorzugt von 9° bis 18° auf. Bei einer Nutzahl von 4 weist der Kreisbogen, der den Hauptkamm HK bildet, im ersten Fall einen Zentriwinkel von 2° bis 20°, bevorzugt von 4° bis 16°, besonders bevorzugt von 6° bis 12° auf. Bei einer Nutzahl von 4 weist der Kreisbogen, der den Hauptkamm HK bildet, im zweiten Fall einen Zentriwinkel von 2° bis 20°, bevorzugt von 4° bis 16°, besonders bevorzugt von 6° bis 12° auf.

Die Figuren 1 bis 14 zeigen Schneckenprofile mit Nutzahlen von Z=1 bis einschließlich Z=4, in denen die Zentriwinkel der Kreisbögen, die die Nebenkämme NK₁ bis NKₙ bilden, verschiedene diskrete Werte aufweisen. Die erfindungsgemäßen Schneckenelemente sind nicht auf diese diskreten Werte limitiert. In einem ersten Fall kann beispielsweise einer der beiden direkt benachbarten Kreisbögen eines Nebenkamms NKᵢ der Hauptkamm HK sein. In einem zweiten Fall kann es beispielsweise sein, dass keiner der beiden direkt benachbarten Kreisbögen eines Nebenkamms NKᵢ der Hauptkamm HK. Bei einer Nutzahl von Z=1 weist ein Kreisbogen, der einen Nebenkamm NKᵢ bildet, im ersten Fall einen Zentriwinkel von größer 0° bis 140°, bevorzugt von größer 0° bis 110°, besonders bevorzugt von größer 0° bis 80° auf. Bei einer Nutzahl von Z=2 weist ein Kreisbogen, der einen Nebenkamm NKᵢ bildet, im ersten Fall einen Zentriwinkel von größer 0° bis 45°, bevorzugt von größer 0° bis 30°, besonders bevorzugt von größer 0° bis 15° auf. Bei einer Nutzahl von Z=2 weist ein Kreisbogen, der einen Nebenkamm NKᵢ bildet, im zweiten Fall einen Zentriwinkel von 5° bis 50°, bevorzugt von 10° bis 40°, besonders bevorzugt von 15° bis 30° auf. Bei einer Nutzahl von Z=3 weist ein Kreisbogen, der einen Nebenkamm NKᵢ bildet, im ersten Fall einen Zentriwinkel von größer 0° bis 27°, bevorzugt von größer 0° bis 18°, besonders bevorzugt von größer 0° bis 9° auf. Bei einer Nutzahl von Z=3 weist ein Kreisbogen, der einen Nebenkamm NKᵢ bildet, im zweiten Fall einen Zentriwinkel von 3° bis 30°, bevorzugt von 6° bis 24°, besonders bevorzugt von 9° bis 18° auf. Bei einer Nutzahl von Z= 4 weist ein Kreisbogen, der einen Nebenkamm NKᵢ bildet, im ersten Fall einen Zentriwinkel von größer 0° bis 18°, bevorzugt von größer 0° bis 12°, besonders bevorzugt von größer 0° bis 6° auf. Bei einer Nutzahl von Z=4 weist ein Kreisbogen, der einen Nebenkamm NKᵢ bildet, im zweiten Fall einen Zentriwinkel von 2° bis 20°, bevorzugt von 4° bis 16°, besonders bevorzugt von 6° bis 12° auf.

**Figur 15****:** zeigt das erfindungsgemäße Schneckenprofil mit der Nutzahl Z=1 aus Figur 2b als ein Paar zweier identischer Schneckenprofile. Die Figur 15 ergibt sich, in dem man das Gehäuse und die Kreisbögen 1, 2, 2a, 3 und 4 des Schneckenprofils aus Figur 2b kopiert und die Kopien um den Achsabstand in Richtung der positiven x-Achse verschiebt. Die kopierten und verschobenen Kreisbögen erhalten die Bezeichnungen 1', 2', 2a', 3' und 4'. Der Kreisbogen 2a des linken Schneckenprofils wird durch das rechte Schneckenprofil nicht gereinigt. Der Kreisbogen 2a' des rechten Schneckenprofils wird durch das linke Schneckenprofil nicht gereinigt. Es liegt keine vollständige Selbstreinigung der Schneckenprofile vor.

**Figur 16****:** zeigt das erfindungsgemäße Schneckenprofil mit der Nutzahl Z=2 aus Figur 6b als ein Paar zweier identischer Schneckenprofile. Die Figur 16 ergibt sich, in dem man das Gehäuse aus Figur 6b kopiert und um den Achsabstand in Richtung der positiven x-Achse verschiebt und in dem man die Kreisbögen 1, 2, 3, 4, 5, 6, 6a, 7 und 8 des Schneckenprofils aus Figur 6b kopiert, die kopierten Kreisbögen am Punkt K2 an der x-Achse spiegelt und im Punkt K2 um 90° in Uhrzeigersinn dreht und diese Kopien um den Achsabstand in Richtung der positiven x-Achse verschiebt. Die kopierten und verschobenen Kreisbögen erhalten die Bezeichnungen 1', 2', 3', 4', 5', 6', 6a', 7' und 8'. Der Kreisbogen 6a des linken Schneckenprofils wird durch das rechte Schneckenprofil nicht gereinigt. Der Kreisbogen 6a' des rechten Schneckenprofils wird durch das linke Schneckenprofil nicht gereinigt. Es liegt keine vollständige Selbstreinigung der Schneckenprofile vor.

**Figur 17****:** zeigt das erfindungsgemäße Schneckenprofil mit der Nutzahl Z=3 aus Figur 12b als ein Paar zweier identischer Schneckenprofile. Die Figur 17 ergibt sich, in dem man das Gehäuse und die Kreisbögen 1, 2, 3, 4, 5, 6, 6a, 7, 8, 9, 10, 11 und 12 des Schneckenprofils aus Figur 12b kopiert und die Kopien um den Achsabstand in Richtung der positiven x-Achse verschiebt. Die kopierten und verschobenen Kreisbögen erhalten die Bezeichnungen 1', 2', 3', 4', 5', 6', 6a', 7', 8', 9', 10', 11' und 12'. Der Kreisbogen 6a des linken Schneckenprofils wird durch das rechte Schneckenprofil nicht gereinigt. Der Kreisbogen 6a' des rechten Schneckenprofils wird durch das linke Schneckenprofil nicht gereinigt. Es liegt keine vollständige Selbstreinigung der Schneckenprofile vor.

**Figur 18****:** zeigt das erfindungsgemäße Schneckenprofil mit der Nutzahl Z=4 aus Figur 14b als ein Paar zweier identischer Schneckenprofile. Die Figur 18 ergibt sich, in dem man das Gehäuse aus Figur 14b kopiert und um den Achsabstand in Richtung der positiven x-Achse verschiebt und in dem man die Kreisbögen 1, 2, 3, 4, 5, 6, 6a, 7, 8, 9, 10, 11, 12, 13, 14, 15 und 16 des Schneckenprofils aus Figur 14b kopiert, die kopierten Kreisbögen am Punkt K2 an der x-Achse spiegelt und im Punkt K2 um 135° in Uhrzeigersinn dreht und diese Kopien um den Achsabstand in Richtung der positiven x-Achse verschiebt. Die kopierten und verschobenen Kreisbögen erhalten die Bezeichnungen 1', 2', 3', 4', 5', 6', 6a', 7', 8', 9', 10', 11', 12', 13', 14', 15' und 16'. Der Kreisbogen 6a des linken Schneckenprofils wird durch das rechte Schneckenprofil nicht gereinigt. Der Kreisbogen 6a' des rechten Schneckenprofils wird durch das linke Schneckenprofil nicht gereinigt. Es liegt keine vollständige Selbstreinigung der Schneckenprofile vor.

**Figur 19****:** zeigt die erfindungsgemäßen Schneckenprofile aus der Figur 16 ausgebildet als ein Paar von Förderelementen mit den Drehachsen D1 und D2, die den dimensionslosen Achsabstand A voneinander besitzen und die sich in gleicher Höhe auf der Antriebswelle AW1 und der Antriebswelle AW2 befinden. Der dimensionslose Gehäuseinnenradius beträgt RG=0,66 und der Schneckenaußenradius dimensionslose RA=0,65. Das dimensionslose Spiel zwischen dem Hauptkamm HK eines Förderelements und der Gehäuseinnenwand beträgt C_HK=0,01. Die dimensionslose Länge der Förderelemente beträgt das 1,2-fache des dimensionslosen Achsabstands A. Die dimensionslose Steigung der Förderelemente beträgt T=1,2 wobei unter der dimensionslosen Steigung der Quotient aus der axialen Länge, die für eine Drehung des Schneckenprofils um einen Winkel von 6,2832=360° erforderlich ist, und dem Achsabstand a verstanden wird. Das Gehäuse wird durch eine Schraffur links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann. Zum Kraftschluss zwischen einer Antriebswelle AW wie der Antriebswelle AW1 oder der Antriebswelle AW2 und einem Schneckenelement können Nut-Feder-Systeme oder Vielverzahnungen zum Einsatz kommen. Vielverzahnungen können trapezförmig oder wellenförmig und jeweils symmetrisch oder asymmetrisch ausgeführt sein.

Alternativ können die erfindungsgemäßen Schneckenprofile aus der Figur 16 auch als ein Paar von Knetelementen oder ein Paar von Mischelementen ausgebildet werden.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Die Reihenfolge der Schneckenelemente bestehend aus Förderelementen und / oder Knetelementen und /oder Mischelementen auf einer Antriebswelle AW wird als Schneckenkonfiguration bezeichnet. Alle Schneckenelemente auf einer Antriebswelle AW und die Antriebswelle AW selbst bilden zusammen eine Schneckenwelle SW. Die erste Antriebswelle wird mit AW1 und die erste Schneckenwelle wird mit SW1 bezeichnet. Die zweite Antriebswelle wird mit AW2 und die zweite Schneckenwelle wird mit SW2 bezeichnet.

Erfindungsgemäße Schneckenprofile können unter anderem besonders einfach aus zu einem Konstruktionspunkt K1 achsensymmetrischen Referenz-Profilen erhalten werden. Ein solches achsensymmetrisches Referenz-Profil ist dadurch gekennzeichnet, dass
- der dimensionslose Kernradius RG, die Nutzahl Z und der dimensionslose Außenradius RA eines solchen achsensymmetrischen Referenz-Profils dem dimensionslosen Kernradius RG, der Nutzahl Z und dem dimensionslosen Außenradius RA eines erfindungsgemäßen Schneckenprofils entsprechen und
- der Konstruktionspunkt K1 eines solchen achsensymmetrischen Referenz-Profils gleich dem Konstruktionspunkt K1 eines erfindungsgemäßen Schneckenprofils ist und
- bei einer ungeraden Nutzahl Z ein solches achsensymmetrische Referenz-Profil achsensymmetrisch zu entweder der x-Achse oder der y-Achse ist und
- bei einer geraden Nutzahl Z ein solches achsensymmetrische Referenz-Profil achsensymmetrisch zu der x-Achse und der y-Achse ist und
- sich zwei gleichartige achsensymmetrische Referenz-Profile paarweise gegenseitig exakt abreinigen,
   o wenn diese achsensymmetrischen Referenz-Profile einen Referenz-Abstand RFA aufweisen, der dem Achsabstand A entspricht, und
   o wenn bei einer ungeraden Nutzahl Z diese achsensymmetrischen Referenz-Profile in ihren jeweiligen Referenz-Drehachsen RFD1 und RFD2 nicht gegeneinander verdreht sind, und
   o wenn bei einer geraden Nutzahl Z diese achsensymmetrischen Referenz-Profile in ihren jeweiligen Referenz-Drehachsen RFD1 und RFD2 um einen Winkel von π/Z=180°/Z gegeneinander verdreht sind, und
   o wenn diese achsensymmetrischen Referenz-Profile sich in ihren jeweiligen Referenz-Drehachsen RFD1 und RFD2 mit gleicher Geschwindigkeit mit dem gleichen Drehsinn drehen.

Somit zeigt
- die Figur 1a ein zu einem Konstruktionspunkt K1 achsensymmetrisches Referenz-Profil mit der Nutzahl Z = 1 für ein erfindungsgemäßes Schneckenprofil nach Figur 2a, Figur 3a oder Figur 4a.
- die Figur 5a ein zu einem Konstruktionspunkt K1 achsensymmetrisches Referenz-Profil mit der Nutzahl Z = 2 für ein erfindungsgemäßes Schneckenprofil nach Figur 6a, Figur 7a, Figur 9a oder Figur 10a.
- die Figur 11a ein zu einem Konstruktionspunkt K1 achsensymmetrisches Referenz-Profil mit der Nutzahl Z = 3 für ein erfindungsgemäßes Schneckenprofil nach Figur 12a.
- die Figur 13a ein zu einem Konstruktionspunkt K1 achsensymmetrisches Referenz-Profil mit der Nutzahl Z = 4 für ein erfindungsgemäßes Schneckenprofil nach Figur 14a.
- die Figur 5a ein zu einem Konstruktionspunkt K1 achsensymmetrisches Referenz-Profil mit der Nutzahl Z = 2 für ein erfindungsgemäßes Schneckenprofil nach Figur 7a. Die Kreisbögen 1 bis 5, der Kreisbogen 8 und der Konstruktionspunkt K1 sind jeweils identisch. Damit sind sowohl der dimensionslose Kernradius RI als auch die Nutzahl Z als auch der dimensionslose Außenradius RA des achsensymmetrischen Referenz-Profils und des erfindungsgemäßen Schneckenprofils jeweils gleich groß. Ferner entsprechen sich damit der Drehpunkt des achsensymmetrischen Referenz-Profils und des erfindungsgemäßen Schneckenprofils.

Um beispielsweise das zum Konstruktionspunkt K1 achsensymmetrische Referenz-Profil nach Figur 5a in das erfindungsgemäße Schneckenprofil nach Figur 7a zu überführen, muss der Kreisbogen 6a, der den Hauptkamm HK darstellt, zwischen den Kreisbögen 6 und 7 in das achsensymmetrische Referenz-Profil eingefügt werden, wobei die Kreisbögen 6 und 7 entsprechend angepasst werden müssen. Der Radius des Kreisbogens 6a wird so gewählt, das er gleich dem dimensionslosen Gehäuseinnenradius RG = 0,66 vermindert um das dimensionslose Spiel C_HK = 0,01 ist. Der Mittelpunkt des Kreisbogens 6a liegt im Konstruktionspunkt K2. Die Lage des Konstruktionspunkts K2 wird so gewählt, dass der kleinere Winkel zwischen der Winkelhalbierenden derjenigen Nut, deren Kreisbogenpunkt, der auf der Winkelhalbierenden der Nut liegt, durch die kleinere Kurvenlänge vom nächstliegenden Punkt des Hauptkamms HK getrennt ist, und der Verbindungslinie zwischen K1 und K2 135,0° beträgt und der Abstand zwischen den Konstruktionspunkten K1 und K2 gleich 0,06 ist. Der neue Endpunkt des Kreisbogens 6 ergibt sich aus dem Schnittpunkt des Kreisbogens 6a mit dem alten Kreisbogen 6. Der Anfangspunkt des Kreisbogens 6a ist gleich dem Endpunkt des Kreisbogens 6. Der neue Anfangspunkt des Kreispunktes 7 ergibt sich aus dem Schnittpunkt des Kreisbogens 6a mit dem alten Kreisbogen 7. Der Endpunkt des Kreisbogens 6a ist gleich dem Anfangspunkt des Kreisbogens 7. Mit den nunmehr jeweils bekannten Anfangspunkten, Endpunkten und Mittelpunkten der Kreisbögen 6, 6a und 7 lassen sich die jeweiligen Zentriwinkel berechnen.

Figur 20 zeigt ein Paar von Referenz-Profilen mit der Nutzahl Z=2. Das zum Konstruktionspunkt K1 achsensymmetrische Referenz-Profil der linken Welle entspricht dem achsensymmetrischen Profil nach Figur 5a. Das achsensymmetrische Referenz-Profil der rechten Welle stellt eine Kopie des Referenz-Profils der linken Welle dar und ist somit ebenfalls achsensymmetrisch,
- welche an der x-Achse gespiegelt wurde und
- welche im Ursprung des xy-Koordinatensystems um einen Winkel von π/2=180°/2=90° im Uhrzeigersinn verdreht wurde und
- welche um einen dimensionslosen Referenz-Achsabstand RFA, der dem dimensionslosen Achsabstand A entspricht, in positive x-Richtung verschoben ist.

Mit dieser Vorgehensweise ist der Kreisbogen 1 des zum Konstruktionspunkt K1 achsensymmetrischen Referenz-Profils der linken Welle in den Kreisbogen 1' des achsensymmetrischen Referenz-Profils der rechten Welle überführt worden. Dies gilt analog für die Kreisbögen 2 bis 8, aus denen die Kreisbögen 2' bis 8' hervorgehen. Der Konstruktionspunkt K1 ist identisch mit dem Referenz-Drehpunkt RFD1. Der um den Referenz-Achsabstand in positive x-Richtung verschobene Konstruktionspunkt K1' ist identisch mit dem Referenz-Drehpunkt RFD2. Die achsensymmetrischen Referenz-Profile der linken und der rechten Welle reinigen sich paarweise gegenseitig ab, wenn sich die achsensymmetrischen Referenz-Profile in ihren jeweiligen Referenz-Drehachsen RFD1 und RFD2 mit gleicher Geschwindigkeit mit dem gleichen Drehsinn drehen.

Der Referenz-Schneckenaußenradius RFRA ist in der Figur 20 gleich dem Referenz-Gehäuseinnenradius RFRG=0,61. Der Referenz-Schneckenaußenradius RFRA ist um 0,2% bis 10%, bevorzugt 0,4% bis 7,5%, besonders bevorzugt 0,6% bis 5%, ganz besonders bevorzugt 0,8% bis 2,5% geringer als der Gehäuseinnenradius RG.

Die Referenz-Profile können bei gegebenen dimensionslosen Achsabstand A, entsprechend dem dimensionslosen Referenz-Achsabstand RFA, leicht nach den in [1], Seiten 95 bis 109 offenbarten Methoden konstruiert werden.

## Patentansprüche

1. Schneckenelement mit der Nutzahl Z,
geeignet für eine zweiwellige Schneckenmaschine
mit zwei gleichsinnig und gleichschnell drehenden Schneckenwellen SW1 und SW2, deren Drehachsen D1 und D2 einen Achsabstand a besitzen und
mit zwei einander durchdringenden, kreisförmigen Gehäusebohrungen, die jeweils einen identischen Gehäuseinnenradius rg aufweisen und deren Bohrungsmittelpunkte M1 und M2 einen Abstand besitzen, der gleich dem Achsabstand a ist, und deren Bohrungsmittelpunkte M1 und M2 mit den Mittelpunkten des Querschnitte der jeweiligen Drehachsen D1 und D2 der Schneckenwellen SW1 und SW2 zusammenfallen,
wobei das Schneckenelement ein Schneckenprofil aufweist, das:
(1) eine geschlossene konvexe Linie bildet,
(2) nur aus Kreisbögen zusammengesetzt ist, deren Radius kleiner oder gleich dem Achsabstand a ist, wobei unmittelbar benachbarte Kreisbögen einen unterschiedlichen Radius aufweisen,
(3) einen ersten Konstruktionspunkt K1 aufweist, der innerhalb des Schneckenprofils liegt,
(4) bezogen auf den Konstruktionspunkt K1 keine Achsensymmetrie aufweist,
(5) sich aus mindestens 4 Kreisbögen zusammensetzt
(6) einen zweiten Konstruktionspunkt K2 aufweist, der nicht mit dem Konstruktionspunkt K1 zusammenfällt, wobei der Konstruktionspunkt K2 innerhalb des Schneckenprofils liegt,
(7) bezogen auf den Konstruktionspunkt K2 weder Punkt- noch Achsensymmetrie aufweist,
(8) einen Drehpunkt DP aufweist, der mit einem der Bohrungsmittelpunkte M1 oder M2 zusammenfällt und der auf einer Strecke vom Konstruktionspunkt K1 zum Konstruktionspunkt K2 liegt,
(9) genau einen Hauptkamm HK aufweist, der Hauptkamm HK aus nur einem Kreisbogen gebildet ist und der Mittelpunkt dieses Kreisbogens der Konstruktionspunkt K2 ist, und wobei der Hauptkamm HK und die Berührpunkte der dem Hauptkamm HK unmittelbar benachbarten zwei Kreisbögen die Menge der Punkte des Schneckenprofils ist, die bezogen auf den Konstruktionspunkt K2 die größte Entfernung von diesem haben,
(10) mindestens eine Nut aufweist, wobei eine Nut aus nur jeweils einem Kreisbogen gebildet ist, dessen Mittelpunkt der Konstruktionspunkt K1 ist, und eine Nut ein Kreisbogen ist, dessen Radius der gleiche ist wie der Kernradius ri, und wobei die einer Nut jeweils unmittelbar benachbarten zwei Kreisbögen bis auf den jeweils gemeinsamen Berührpunkt einen größeren Abstand von dem Konstruktionspunkt K1 besitzen als der Kreisbogen dieser Nut,
(11) mehrere Flanken aufweist, wobei Flanken die Bereiche des Schneckenprofils sind, deren Kreisbögen einen Mittelpunkt besitzen, der weder der Konstruktionspunkt K1 noch der Konstruktionspunkt
(12) eine Nut vom nächstliegenden Punkt des Hauptkamms HK durch mindestens einen Kreisbogen getrennt ist, der eine Flanke ist.

2. Schneckenelement nach Anspruch 1, wobei der Kreisbogen, der den Hauptkamm HK bildet, einen Zentriwinkel aufweist, der größer als 0° ist, bevorzugt von 1° bis 179° ist.

3. Schneckenelement nach Anspruch 1 oder 2, wobei es bezogen auf den Konstruktionspunkt K1 keine Punktsymmetrie oder eine Punktsymmetrie aufweist, bevorzugt bezogen auf den Konstruktionspunkt K1 keine Punktsymmetrie aufweist.

4. Schneckenelement nach einem der vorhergehenden Ansprüche, wobei die Anzahl der Kreisbögen des Schneckenprofils gleich der Nutzahl Z vervielfacht um 4 ist oder gleich der Nutzahl vervielfacht um 4 und anschließend vermehrt um 1 ist, wobei bevorzugt das Schneckenprofil des Schneckenelements
- bei einer Nutzahl Z=1 aus genau 4 Kreisbögen oder genau 5 Kreisbögen zusammensetzt ist, besonders bevorzugt aus genau 5 Kreisbögen,
- bei einer Nutzahl Z=2 aus genau 8 Kreisbögen oder genau 9 Kreisbögen zusammensetzt ist, bevorzugt aus genau 9 Kreisbögen,
- bei einer Nutzahl Z=3 aus genau 12 Kreisbögen oder genau 13 Kreisbögen zusammensetzt ist, bevorzugt aus genau 13 Kreisbögen,
- bei einer Nutzahl Z=4 bevorzugt aus genau 16 Kreisbögen oder genau 17 Kreisbögen zusammensetzt ist, bevorzugt aus genau 17 Kreisbögen.

5. Schneckenelement nach einem der vorhergehenden Ansprüche, wobei der zweite Konstruktionspunkt K2 des Schneckenprofil innerhalb eines Kreises mit dem Konstruktionspunkt K1 als Mittelpunkt und dem Kernradius ri als Radius liegt.

6. Schneckenelement nach einem der vorhergehenden Ansprüche, wobei der Drehpunkt DP des erfindungsgemäßen Schneckenelements liegt bevorzugt näher beim Konstruktionspunkt K2 als beim Konstruktionspunkt K1 liegt, bevorzugt der Drehpunkt DP auf dem Konstruktionspunkt K2 liegt.

7. Schneckenelement nach einem der vorhergehenden Ansprüche, wobei der Radius rHK des Kreisbogen des Hauptkamms HK dem Gehäuseinnenradius rg vermindert um das Hauptkammspiel c_HK entspricht.

8. Schneckenelement nach einem der vorhergehenden Ansprüche, wobei die Kreisbögen, die die Nuten bilden,
- bei einer Nutzahl Z=1 einen Zentriwinkel von 90° bis 150°, bevorzugt von 95° bis 140°, besonders bevorzugt von 100° bis 130° aufweisen,
- bei einer Nutzahl Z=2 jeweils einen Zentriwinkel von 5° bis 50°, bevorzugt von 10° bis 40°, besonders bevorzugt von 15° bis 30° aufweisen, wobei die Zentriwinkel der Nuten gleich oder unterschiedlich sein können,
- bei einer Nutzahl Z=3 jeweils einen Zentriwinkel von 3° bis 30°, bevorzugt von 6° bis 24°, besonders bevorzugt von 9° bis 18° aufweisen, wobei die Zentriwinkel der Nuten gleich oder unterschiedlich sein können,
- bei einer Nutzahl Z=4 jeweils einen Zentriwinkel von 2° bis 20°, bevorzugt von 4° bis 16°, besonders bevorzugt von 6° bis 12° aufweisen.

9. Schneckenelement nach einem der vorhergehenden Ansprüche, wobei das Schneckenprofil einen dritten Konstruktionspunkt K3 aufweist, wobei das Schneckenprofil bezogen auf den Konstruktionspunkt K3 keine Achsensymmetrie und keine Punktsymmetrie aufweist, wobei der Konstruktionspunkt K3 ein Punkt ist, der den gleichen Abstand zum Konstruktionspunkt K1 aufweist wie der Konstruktionspunkt K2 und wobei die Konstruktionspunkte K1, K2 und K3 auf einer Geraden liegen und K1, K2 und K3 nicht identisch sind.

10. Schneckenelement nach einem der vorhergehenden Ansprüche, wobei das Schneckenprofil kann Nebenkamm NK oder mehrere Nebenkämme NKₗ bis NKₙ aufweist, wobei ein Nebenkamm NKᵢ jeweils aus nur einem Kreisbogen gebildet ist, dessen Mittelpunkt der Konstruktionspunkt K1 oder der Konstruktionspunkt K2 oder der Konstruktionspunkt K3 ist.

11. Schneckenelement nach einem der vorhergehenden Ansprüche, wobei eine Nut vom nächstliegenden Punkt eines Nebenkamms NKᵢ durch mindestens einen Kreisbogen getrennt, der eine Flanke ist.

12. Schneckenelement nach einem der vorhergehenden Ansprüche, **dadurch gekennzeichnet, dass** der Drehpunkt DP des Schneckenprofils der Konstruktionspunkt K2 ist.

13. Schneckenelement nach einem der vorherigen Ansprüche, wobei es dazu geeignet ist, in der Schneckenmaschine mit einem anderen Schneckenelement mit gleichem oder unterschiedlichen Schneckenprofil und gleichen oder unterschiedlicher Anordnung des Drehpunkts auf der anderen Schneckenwelle paarweise angeordnet zu sein und betrieben zu werden, wobei bevorzugt zwei gleiche Schneckenelemente nach einem der vorherigen Ansprüche eingesetzt werden.

14. Schneckenelement nach einem der vorherigen Ansprüche, wobei
• der Kernradius ri, die Nutzahl Z und der Außenradius ra eines Schneckenprofils dem Kernradius ri, der Nutzahl Z und dem Außenradius ra eines Referenzschneckenprofils entsprechen
und
der Konstruktionspunkt K1 eines Schneckenprofils gleich dem Konstruktionspunkt K1 eines Referenz-Profils ist,
• wobei der Referenz-Schneckenaußenradius rfra um 0,2% bis 10%, bevorzugt 0,4% bis 7,5%, besonders bevorzugt 0,6% bis 5%, ganz besonders bevorzugt 0,8% bis 2,5% geringer ist als der Gehäuseinnenradius rg,
• wobei sich zwei gleichartige Referenz-Profile paarweise gegenseitig exakt abreinigen,
o wenn die Referenz-Profile einen Referenz-Abstand rfa aufweisen, der dem Achsabstand a entspricht, und
o wenn die Referenz-Profile sich in ihren jeweiligen Referenz-Drehpunkten rfDP1 und rfDP2 mit gleicher Geschwindigkeit mit dem gleichen Drehsinn drehen.

15. Extruder mit zwei oder mehr gleichsinnig und gleich schnell drehenden Antriebswellen, wobei der Extruder mit zwei oder mehr gleichen oder unterschiedlichen Schneckenelementen nach einem der vorherigen Ansprüche ausgerüstet ist.

16. Verwendung des Schneckenelements nach einem der vorhergehenden Ansprüche zur Verarbeitung oder Herstellung von plastischen Massen.

## Claims

1. Screw element having a number of grooves Z, suitable for a twin-shaft screw machine
having two screw shafts SW1 and SW2 that rotate in the same direction and at the same speed, the axes of rotation D1 and D2 of which are at an axial distance a and
having two circular housing bores which penetrate one another, each of which has an identical housing inner radius rg and the bore centers M1 and M2 of which are at a distance which is equal to the axial distance a, and the bore centers M1 and M2 of which coincide with the centers of the cross sections of the respective axes of rotation D1 and D2 of the screw shafts SW1 and SW2,
wherein the screw element has a screw profile which:
(1) forms a closed convex line,
(2) is composed only of circular arcs the radius of which is less than or equal to the axial distance a, wherein directly adjacent circular arcs have a different radius,
(3) has a first construction point K1 which lies within the screw profile,
(4) is not axisymmetric in relation to the construction point K1,
(5) is composed of at least 4 circular arcs,
(6) has a second construction point K2 which does not coincide with the construction point K1, wherein the construction point K2 lies within the screw profile,
(7) is not point-symmetric or axisymmetric in relation to the construction point K2,
(8) has a point of rotation DP which coincides with one of the bore centers M1 or M2 and which lies on a path from the construction point K1 to the construction point K2,
(9) has exactly one main flight land HK, the main flight land HK is formed from only one circular arc and the center of this circular arc is the construction point K2, and wherein the main flight land HK and the points of contact of the two circular arcs directly adjacent to the main flight land HK is the set of points of the screw profile that are furthest away from the construction point K2,
(10) has at least one groove, wherein one groove is formed from only one respective circular arc the center of which is the construction point K1, and one groove is a circular arc the radius of which is the same as the core radius ri, and wherein the two circular arcs respectively directly adjacent to one groove, apart from the respective common point of contact, have a greater distance from the construction point K1 than the circular arc of this groove,
(11) has a plurality of flanks, wherein flanks are those regions of the screw profile the circular arcs of which have a center which neither the construction point K1 nor the construction point
(12) a groove is separated from the closest point of the main flight land HK by at least one circular arc, which is a flank.

2. Screw element according to Claim 1, wherein the circular arc which forms the main flight land HK has a center angle which is greater than 0°, preferably of 1° to 179°.

3. Screw element according to Claim 1 or 2, wherein it is not point-symmetric or is point-symmetric in relation to the construction point K1, preferably is not point-symmetric in relation to the construction point K1.

4. Screw element according to one of the preceding claims, wherein the number of circular arcs of the screw profile is equal to the number of grooves Z multiplied by 4 or equal to the number of grooves multiplied by 4 and then increased by 1, wherein, preferably, the screw profile of the screw element
- at a number of grooves Z=1 is composed of exactly 4 circular arcs or exactly 5 circular arcs, particularly preferably of exactly 5 circular arcs,
- at a number of grooves Z=2 is composed of exactly 8 circular arcs or exactly 9 circular arcs, preferably of exactly 9 circular arcs,
- at a number of grooves Z=3 is composed of exactly 12 circular arcs or exactly 13 circular arcs, preferably of exactly 13 circular arcs,
- at a number of grooves Z=4 is preferably composed of exactly 16 circular arcs or exactly 17 circular arcs, preferably of exactly 17 circular arcs.

5. Screw element according to one of the preceding claims, wherein the second construction point K2 of the screw profile lies within a circle having the construction point K1 as the center and the core radius ri as the radius.

6. Screw element according to one of the preceding claims, wherein the point of rotation DP of the screw element according to the invention preferably lies closer to the construction point K2 than to the construction point K1, preferably the point of rotation DP lies on the construction point K2.

7. Screw element according to one of the preceding claims, wherein the radius rHK of the circular arc of the main flight land HK corresponds to the housing inner radius rg reduced by the main flight-land clearance c_HK.

8. Screw element according to one of the preceding claims, wherein the circular arcs forming the grooves
- at a number of grooves Z=1 have a center angle of 90° to 150°, preferably of 95° to 140°, particularly preferably of 100° to 130°,
- at a number of grooves Z=2 respectively have a center angle of 5° to 50°, preferably of 10° to 40°, particularly preferably of 15° to 30°, wherein the center angles of the grooves may be the same or different,
- at a number of grooves Z=3 respectively have a center angle of 3° to 30°, preferably of 6° to 24°, particularly preferably of 9° to 18°, wherein the center angles of the grooves may be the same or different,
- at a number of grooves Z=4 respectively have a center angle of 2° to 20°, preferably of 4° to 16°, particularly preferably of 6° to 12°.

9. Screw element according to one of the preceding claims, wherein the screw profile has a third construction point K3, wherein the screw profile is not axisymmetric and not point-symmetric in relation to the construction point K3, wherein the construction point K3 is a point which has the same distance to the construction point K1 as the construction point K2, and wherein the construction points K1, K2 and K3 lie on a straight line and K1, K2 and K3 are not identical.

10. Screw element according to one of the preceding claims, wherein the screw profile may have a secondary flight land NK or a plurality of secondary flight lands NK₁ to NKₙ, wherein each secondary flight land NKᵢ is formed from only one circular arc, the center of which is the construction point K1 or the construction point K2 or the construction point K3.

11. Screw element according to one of the preceding claims, wherein a groove is separated from the closest point of a secondary flight land NKᵢ by at least one circular arc, which is a flank.

12. Screw element according to one of the preceding claims, **characterized in that** the point of rotation DP of the screw profile is the construction point K2.

13. Screw element according to one of the preceding claims, wherein it is suitable for being arranged and operated in pairs in the screw machine with another screw element having the same or a different screw profile and the same or a different arrangement of the point of rotation on the other screw shaft, wherein preferably two identical screw elements according to one of the preceding claims are used.

14. Screw element according to one of the preceding claims, wherein
• the core radius ri, the number of grooves Z and the outer radius ra of a screw profile correspond to the core radius ri, the number of grooves Z and the outer radius ra of a reference screw profile
and
the construction point K1 of a screw profile is the same as the construction point K1 of a reference profile,
• wherein the reference screw outer radius rfra is smaller than the housing inner radius rg by 0.2% to 10%, preferably 0.4% to 7.5%, particularly preferably 0.6% to 5%, very particularly preferably 0.8% to 2.5%,
• wherein two similar reference profiles precisely clean one another in pairs
o if the reference profiles have a reference distance rfa which corresponds to the axial distance a, and
o if the reference profiles rotate in their respective reference points of rotation rfDP1 and rfDP2 at the same speed with the same direction of rotation.

15. Extruder having two or more drive shafts that rotate in the same direction and at the same speed, wherein the extruder is equipped with two or more identical or different screw elements according to one of the preceding claims.

16. Use of the screw element according to one of the preceding claims for processing or producing plastic masses.

## Revendications

1. Élément de vis sans fin avec le nombre de rainures Z,
adapté à une machine à vis sans fin à deux arbres avec deux arbres de vis sans fin SW1 et SW2 tournant dans le même sens et à la même vitesse, dont les axes de rotation D1 et D2 possèdent un entraxe a et
avec deux alésages de boîtier circulaires se pénétrant l'un l'autre, qui présentent chacun un rayon intérieur de boîtier rg identique et dont les points centraux d'alésage M1 et M2 possèdent une distance qui est égale à l'entraxe a, et dont les points centraux d'alésage M1 et M2 coïncident avec les points centraux des sections transversales des axes de rotation respectifs D1 et D2 des arbres de vis sans fin SW1 et SW2,
l'élément de vis sans fin présentant un profil de vis sans fin qui :
(1) forme une ligne convexe fermée,
(2) est composé uniquement d'arcs de cercle dont le rayon est inférieur ou égal à l'entraxe a, des arcs de cercle directement voisins présentant un rayon différent,
(3) présente un premier point de construction K1, qui se situe à l'intérieur du profil de vis sans fin,
(4) ne présente pas de symétrie axiale par rapport au point de construction K1,
(5) se compose d'au moins 4 arcs de cercle,
(6) présente un deuxième point de construction K2 qui ne coïncide pas avec le point de construction K1, le point de construction K2 se situant à l'intérieur du profil de vis sans fin,
(7) ne présente ni symétrie ponctuelle ni symétrie axiale par rapport au point de construction K2,
(8) présente un point de rotation DP qui coïncide avec l'un des points centraux d'alésage M1 ou M2 et qui se situe sur un trajet allant du point de construction K1 au point de construction K2,
(9) présente exactement une crête principal HK, la crête principal HK étant formée d'un seul arc de cercle et le point central de cet arc de cercle étant le point de construction K2, et la crête principal HK et les points de contact des deux arcs de cercle directement voisins de la crête principale HK étant l'ensemble des points du profil de vis sans fin qui, par rapport au point de construction K2, sont les plus éloignés de celui-ci,
(10) présente au moins une rainure, une rainure étant respectivement formée d'un seul arc de cercle, dont le point central est le point de construction K1, et une rainure étant un arc de cercle dont le rayon est identique au rayon de noyau ri, et les deux arcs de cercle respectivement directement voisins d'une rainure possédant, à l'exception du point de contact respectif commun, une distance plus grande par rapport au point de construction K1 que l'arc de cercle de cette rainure,
(11) présente plusieurs flancs, les flancs étant les zones du profil de vis sans fin dont les arcs de cercle possèdent un point central qui ni le point de construction Kl ni le point de construction,
(12) une rainure est séparée du point le plus proche de la crête principale HK par au moins un arc de cercle qui est un flanc.

2. Élément de vis sans fin selon la revendication 1, l'arc de cercle qui forme la crête principale HK présentant un angle au centre qui est supérieur à 0°, de préférence de 1° à 179°.

3. Élément de vis sans fin selon la revendication 1 ou 2, celui-ci ne présentant aucune symétrie ponctuelle par rapport au point de construction K1 ou une symétrie ponctuelle, de préférence aucune symétrie ponctuelle par rapport au point de construction K1.

4. Élément de vis sans fin selon l'une quelconque des revendications précédentes, le nombre d'arcs de cercle du profil de vis sans fin étant égal au nombre de rainures Z multiplié par 4 ou égal au nombre de rainures Z multiplié par 4 puis augmenté de 1, de préférence le profil de vis sans fin de l'élément de vis sans fin
- pour un nombre de rainures Z = 1, étant composé d'exactement 4 arcs de cercle ou d'exactement 5 arcs de cercle, de manière particulièrement préférée d'exactement 5 arcs de cercle,
- pour un nombre de rainures Z = 2, étant composé d'exactement 8 arcs de cercle ou d'exactement 9 arcs de cercle, de préférence d'exactement 9 arcs de cercle,
- pour un nombre de rainures Z = 3, étant composé d'exactement 12 arcs de cercle ou d'exactement 13 arcs de cercle, de préférence d'exactement 13 arcs de cercle,
- pour un nombre de rainures Z = 4, étant composé de préférence d'exactement 16 arcs de cercle ou d'exactement 17 arcs de cercle, de préférence d'exactement 17 arcs de cercle.

5. Élément de vis sans fin selon l'une quelconque des revendications précédentes, le deuxième point de construction K2 du profil de vis sans fin se situant à l'intérieur d'un cercle ayant le point de construction K1 en tant que point central et le rayon de noyau ri en tant que rayon.

6. Élément de vis sans fin selon l'une quelconque des revendications précédentes, le point de rotation DP de l'élément de vis sans fin selon l'invention se situant de préférence plus près du point de construction K2 que du point de construction K1, de préférence le point de rotation DP se situant sur le point de construction K2.

7. Élément de vis sans fin selon l'une quelconque des revendications précédentes, le rayon rHK de l'arc de cercle de la crête principale HK correspondant au rayon intérieur de boîtier rg diminué du jeu de crête principale c_HK.

8. Élément de vis sans fin selon l'une quelconque des revendications précédentes, les arcs de cercle qui forment les rainures
- pour un nombre de rainures Z = 1, présentant un angle au centre de 90° à 150°, de préférence de 95° à 140°, de manière particulièrement préférée de 100° à 130°,
- pour un nombre de rainures Z = 2, présentant respectivement un angle au centre de 5° à 50°, de préférence de 10° à 40°, de manière particulièrement préférée de 15° à 30°, les angles au centre des rainures pouvant être identiques ou différents,
- pour un nombre de rainures Z = 3, présentant respectivement un angle au centre de 3° à 30°, de préférence de 6° à 24°, de manière particulièrement préférée de 9° à 18°, les angles au centre des rainures pouvant être identiques ou différents,
- pour un nombre de rainures Z = 4, présentant respectivement un angle au centre de 2° à 20°, de préférence de 4° à 16°, de manière particulièrement préférée de 6° à 12°.

9. Élément de vis sans fin selon l'une quelconque des revendications précédentes, le profil de vis sans fin présentant un troisième point de construction K3, le profil de vis sans fin ne présentant pas de symétrie axiale et pas de symétrie ponctuelle par rapport au point de construction K3, le point de construction K3 étant un point qui présente la même distance par rapport au point de construction K1 que le point de construction K2 et les points de construction K1, K2 et K3 se situant sur une ligne droite et Kl, K2 et K3 n'étant pas identiques.

10. Élément de vis sans fin selon l'une quelconque des revendications précédentes, le profil de vis sans fin pouvant présenter une crête secondaire NK ou plusieurs crêtes secondaires NK₁ à NKₙ, une crête secondaire NKᵢ étant formée respectivement d'un seul arc de cercle dont le point central est le point de construction K1 ou le point de construction K2 ou le point de construction K3.

11. Élément de vis sans fin selon l'une quelconque des revendications précédentes, une rainure étant séparée du point le plus proche d'une crête secondaire NKᵢ par au moins un arc de cercle qui est un flanc.

12. Élément de vis sans fin selon l'une quelconque des revendications précédentes, **caractérisé en ce que** le point de rotation DP du profil de vis sans fin est le point de construction K2.

13. Élément de vis sans fin selon l'une quelconque des revendications précédentes, celui-ci étant adapté pour être apparié et pour fonctionner dans la machine à vis sans fin avec un autre élément de vis sans fin ayant un profil de vis sans fin identique ou différent et un agencement identique ou différent du point de rotation sur l'autre arbre de vis sans fin, de préférence deux éléments de vis sans fin identiques selon l'une quelconque des revendications précédentes étant utilisés.

14. Élément de vis sans fin selon l'une quelconque des revendications précédentes,
- le rayon de noyau ri, le nombre de rainures Z et le rayon extérieur ra d'un profil de vis sans fin correspondant au rayon de noyau ri, au nombre de rainures Z et au rayon extérieur ra d'un profil de vis sans fin de référence,
et
le point de construction K1 d'un profil de vis sans fin étant identique au point de construction K1 d'un profil de référence,
- le rayon extérieur de vis sans fin de référence rfra étant inférieur de 0,2 % à 10 %, de préférence de 0,4 % à 7,5 %, de manière particulièrement préférée de 0,6 % à 5 %, de manière tout particulièrement préférée de 0,8 % à 2,5 %, au rayon intérieur de boîtier rg,
- deux profils de référence similaires se nettoyant exactement l'un l'autre par paires,
o lorsque les profils de référence présentent une distance de référence rfa qui correspond à l'entraxe a, et
o lorsque les profils de référence tournent dans leurs points de rotation de référence respectifs rfDP1 et rfDP2 à la même vitesse dans le même sens de rotation.

15. Extrudeuse avec deux ou plus de deux arbres d'entraînement tournant dans le même sens et à la même vitesse, l'extrudeuse étant équipée de deux ou plus de deux éléments de vis sans fin identiques ou différents selon l'une quelconque des revendications précédentes.

16. Utilisation de l'élément de vis sans fin selon l'une quelconque des revendications précédentes pour l'usinage ou la production de masses plastiques.
